# EUROPÄISCHE PATENTSCHRIFT

(11) **EP 3 126 799 B1**
(45) Veröffentlichungstag und Bekanntmachung des Hinweises auf die Patenterteilung: **19.08.2020**
(21) Anmeldenummer: 15732168.8
(22) Anmeldetag: 30.03.2015
(51) Int. Cl.: G01K 3/04

(54) **ANZEIGEVORRICHTUNG**
INDICATING DEVICE
DISPOSITIF D'AFFICHAGE

(30) Priorität: 31.03.2014 EP 14162746
(43) Veröffentlichungstag der Anmeldung: 08.02.2017
(73) Patentinhaber: Innorese AG, 9000 St. Gallen (CH)
(72) Erfinder: WÖTZER, Philipp, CH-6331 Hünenberg Kanton Zug (CH)
(74) Vertreter: Hoffmann Eitle
(86) Internationale Anmeldenummer: PCT/EP2015/056868
(87) Internationale Veröffentlichungsnummer: WO 2015/150312

(56) Entgegenhaltungen:
- EP-A1- 2 378 354
- CA-A1- 2 096 742

## Beschreibung

### 1. Technisches Gebiet

Die vorliegende Erfindung betrifft Anzeigevorrichtungen und insbesondere Vorrichtungen zur Erfassung und Anzeige der thermischen Vorgeschichte von gekühlten Waren und insbesondere von Tiefkühlprodukten. Sie betrifft überdies Verfahren zu deren Herstellung sowie die Anwendung der erfindungsgemäßen Vorrichtungen bei der Überwachung der thermischen Vorgeschichte von gekühlten Produkten und insbesondere Tiefkühlprodukten.

### 2. Stand der Technik

Vorrichtungen zur Anzeige der thermischen Vorgeschichte von Produkten (auch als "Temperatur-Zeit-Indikatoren" bezeichnet) zeigen an, ob die Kühlkette des betreffenden Produktes unterbrochen wurde, d.h. ob das Produkt über eine relevante Zeitdauer eine kritische Temperatur überschritten hat. Derartige Anzeigevorrichtungen sind insbesondere für Tiefkühlprodukte von Interesse. In diesem Fall zeigt die Vorrichtung an, ob das Produkt sich auf eine Temperatur oberhalb der kritischen Temperatur von 0°C erwärmen konnte.

Es besteht ein großer Bedarf an derartigen Anzeigevorrichtungen, da bei Unterbrechung der Kühlkette die gewünschte Produktqualität nicht mehr gewährleistet werden kann. So besteht beispielsweise bei tiefgekühlten Lebensmitteln die Gefahr von unkontrolliertem Bakterienwachstum bei einer Unterbrechung der Tiefkühlkette. Derartiges Bakterienwachstum kann beträchtliche Gesundheitsrisiken für den Konsumenten bergen.

In Anbetracht dieses Bedarfes gab und gibt es vielfältige Anstrengungen geeignete Temperatur-Zeit-Indikatoren zu entwickeln. Hier können beispielhaft die Anzeigevorrichtung gemäß WO 2007/045424 sowie die Zeit-Temperatur-Indikatoren OnVu ICE der BASF und Indikatoren der Firma Timestrip in 40549 Düsseldorf genannt werden.

Weitere Anzeigevorrichtungen werden in PCT/EP2013/070328 beschrieben. Die Offenbarung dieser früheren Patentanmeldung wird im gesamten Umfang durch Bezugnahme in die vorliegende Anmeldung aufgenommen.

Eine weitere Anzeigevorrichtung wird in CA 2096742 beschrieben. Dieses Dokument beschreibt als Matrixmaterialien verschieden Konstharze wie Epoxy, Phenol-formaldehyd, Amino-formaldehyd, Polyamid, etc, jedoch keine Cellulosederivate.

EP 2 378 354 beschreibt einen elektrochemischen Prozessor umfassend zwei Elektroden und einen dazwischen liegenden Elektrolyten zur Verwendung als elektrochemische Anzeigevorrichtung.

Die aus dem Stand der Technik bekannten Zeit-Temperatur-Indikatoren sind jedoch nicht in der Lage, Unterbrechungen der Kühlkette zuverlässig anzuzeigen. Zum einen besteht das Risiko, dass eine kurzfristige Erwärmung der Verpackung (z.B. durch die Hände des Konsumenten im Supermarkt) zu einer falsch-positiven Anzeige führt. Zum anderen besteht das Risiko bei den Zeit-Temperatur-Indikatoren des Stands der Technik, dass eine Unterbrechung der Kühlkette nicht als solches angezeigt wird, sofern sich innerhalb der Verpackung Luft zwischen dem Kühlgut und der Anzeigevorrichtung befindet.

Ein weiteres Problem, welches beispielsweise bei dem kommerziellen Indikator der Fa. Timestrip auftritt, ist die Gleichförmigkeit des angezeigten Farbumschlags (d.h. die gleichbleibende Zeitdauer zwischen Erreichen einer kritischen Temperatur des Indikators und Farbumschlag - unabhängig von der Natur des Kühlguts). Eine solche Gleichförmigkeit ist unerwünscht, da manche Tiefkühlprodukte deutlich schneller auftauen als andere. Eine zuverlässige Anzeige sollte derartige Unterschiede berücksichtigen.

### 3. Zusammenfassung der Erfindung

In Anbetracht der oben genannten Probleme der aus dem Stand der Technik bekannten Zeit-Temperatur-Indikatoren befasst sich die vorliegende Erfindung mit der Aufgabe einen Zeit-Temperatur-Indikator bereitzustellen, welcher zuverlässig Unterbrechungen der Kühlkette anzeigt ohne dass es zu falsch-positiven Anzeigen kommt und bei dem Unterbrechungen der Kühlkette zuverlässig angezeigt werden, selbst wenn sich Luft zwischen dem Kühlgut und der Anzeigevorrichtung befindet. Weiterhin soll die Anzeige des erfindungsgemäßen Indikators die tatsächliche Auftaugeschwindigkeit des Kühlguts berücksichtigen.

Diese Aufgabe wird durch die Vorrichtung gemäß nachfolgendem Anspruch 1 gelöst. Bevorzugte Ausgestaltungen dieser Vorrichtung werden in nachfolgenden Ansprüchen 2-8 gekennzeichnet.

Die vorliegende Erfindung betrifft weiterhin Verfahren zur Herstellung der erfindungsgemäßen Anzeigevorrichtungen. Diese Verfahren sind in nachfolgenden Patentansprüchen 9-14 gekennzeichnet.

Schlussendlich betrifft die vorliegende Erfindung auch Verpackungen für Tiefkühlprodukte wie in nachfolgendem Patentanspruch 15 beschrieben, sowie die diese Verpackung umfassenden Tiefkühlprodukte gemäß nachfolgendem Anspruch 16.

### 4. Beschreibung der Zeichnungen

Figur 1 stellt die Schichtfolge der erfindungsgemäßen Vorrichtung in ihrer einfachsten Ausgestaltung dar.
Figur 2 stellt die Schichtfolge der erfindungsgemäßen Vorrichtung in einer weiteren Ausgestaltung mit Haftschichten dar.
Figuren 3 bis 13 stellen die Schichtfolgen weiterer erfindungsgemäßer Vorrichtungen dar.

Die in den Figuren eingesetzten Bezugszeichen haben die folgenden Bedeutungen:
1 - Deckschicht (a)
2 - Indikatorschicht (b)
3 - Aktivatorschicht (c)
4 - Verzögerungsschicht (d)
4' - Verzögerungsschicht (d) als Bestandteil der Produktverpackung
5 - obere Haftschicht
6 - mittlere Haftschicht
7 - untere Haftschicht
8 - Trennschicht

### 5. Ausführliche Beschreibung der Erfindung

### 5.1. Definitionen

Der Begriff "Indikator" bezieht sich im Zusammenhang mit der vorliegenden Erfindung auf eine Substanz, die bei Wechselwirkung (chemische oder physikalische Reaktion) mit dem Aktivator ihre optische Erscheinung verändert. Dies umfasst insbesondere einen Farbumschlag, wobei die Farben (einschließlich farblos) vor und nach dem Farbumschlag nicht festgelegt sind.

Der Begriff "Aktivator" bezieht sich im Zusammenhang mit der vorliegenden Erfindung auf eine Substanz, die geeignet ist durch Wechselwirkung mit dem Indikator eine Änderung der optischen Erscheinung des Indikators herbeizuführen.

Die Eignung einer Substanz als Indikator oder Aktivator im Sinne der vorliegenden Erfindung hängt von der Identität des jeweiligen Reaktionspartners ab. Somit ist die Erfüllung des Kriteriums "Indikator" immer im Zusammenhang mit der Erfüllung des Kriteriums "Aktivator" zu prüfen (und umgekehrt). Die Eignung des Indikators umfasst auch das Vorliegen des Indikators in einer für die Reaktion mit dem Aktivator geeigneten Form, z.B. das Vorliegen eines pH Indikators in der protonierten Form wenn der Aktivator eine Base ist, bzw. das Vorliegen eines pH Indikators in der deprotonierten Form wenn der Aktivator eine Säure ist.

Im Zusammenhang mit der vorliegenden Erfindung bezieht sich die Angabe der "Zeitdauer zwischen Beginn des Auftauens und Farbumschlag" (in dieser Anmeldung auch mit "Umschlagszeitdauer" bezeichnet) auf die Zeitdauer, die gemessen werden kann bis zum mit bloßem Auge erkennbaren Farbumschlag, wenn ein Produkt tiefgekühlter Erbsen (300 g, Tiefkühltemperatur -18°C, Standardverpackung, keine Folie innen, lediglich Kartonumverpackung mit 320 g/m²) in eine Raumtemperatur-Umgebung (Holztisch unten, seitlich und oben Luft, jeweils temperiert auf +20°C) gebracht wird.

Die Umschlagszeitdauer wird wesentlich durch die "gesamte Verzögerungswirkung" der "relevanten Schichten" bestimmt. Die "gesamte Verzögerungswirkung bezeichnet die Zeitdauer, die erforderlich ist für eine für den Farbumschlag ausreichende Menge an Feuchtigkeit vom Kühlgut durch alle relevanten Schichten zur obersten farbgebenden Schicht zu migrieren. In diesem Zusammenhang bezieht sich der Begriff "relevante Schichten" auf alle Schichten der erfindungsgemäßen Vorrichtung von der untersten Schicht bis einschließlich der obersten farbgebenden Schicht. Auch die unter der erfindungsgemäßen Vorrichtung liegende Produktverpackung ist eine die gesamte Verzögerungswirkung bestimmende relevante Schicht. Sofern die Art der Produktverpackung nicht bekannt ist, ist für die Bestimmung der gesamten Verzögerungswirkung die Verwendung einer Kartonverpackung mit einer Stärke von 320 g/m² anzunehmen.

Es ist ein wesentliches Charakteristikum der erfindungsgemäßen Vorrichtung, dass sie vor dem Eindringen von Feuchtigkeit aus dem Kühlgut trocken ist. "Trocken" bedeutet in diesem Zusammenhang ein Gehalt an Feuchtigkeit, der so gering ist, dass die Farbreaktion, die zu dem gewünschten Farbumschlag führt, nicht in einem mit bloßem Auge erkennbaren Umfang abläuft. Dies gilt insbesondere für die zu erwartenden Lagerungsbedingungen, also z.B. bei Lagerung der erfindungsgemäßen Vorrichtung bei 25°C und <5% relativer Luftfeuchtigkeit über einen Zeitraum von 2 Monaten, bevorzugt 6 Monaten. Vorzugsweise findet auch keine mit bloßem Auge erkennbare Farbreaktion bei Lagerung der erfindungsgemäßen Vorrichtung bei -18°C und 100% relativer Luftfeuchtigkeit über 12 Monate, bevorzugt 24 Monate, statt.

Soweit nicht in der vorliegenden Anmeldung anders bestimmt haben die hier verwendeten Begriffe die im betreffenden technischen Gebiet allgemein übliche Bedeutung wie sie z.B. aus einschlägigen Lexika, Fachwörterbüchern und Enzyklopädien entnommen werden kann.

Flächengewichte von Papier und Karton beziehen sich auf Flächengewichte gemäß DIN 6730. Bei Folien beziehen sich Angaben zu Flächengewichten auf DIN 53352. Stärkenangaben bei Folien beziehen sich auf DIN 53370.

### 5.2. Überblick

Überraschend wurde nun gefunden, dass die durch Erwärmung von Tiefkühlprodukten auf Temperaturen über 0°C in der Verpackung gebildete Feuchtigkeit in ausreichender Menge durch die Verpackung der Tiefkühlprodukte migriert um auf deren Außenseite chemische Reaktionen auslösen zu können. Diese Erkenntnis macht sich die vorliegende Erfindung zu Nutze um Erwärmung über den Gefrierpunkt anzuzeigen: Bei Erwärmung über den Gefrierpunkt wird durch das partielle Auftauen des Kühlguts Feuchtigkeit freigesetzt. Ein Teil dieser Feuchtigkeit migriert durch die Verpackung zu der erfindungsgemäßen Anzeigevorrichtung. Die Feuchtigkeit dringt in die erfindungsgemäße Vorrichtung ein. Dort werden Indikator und/oder Aktivator durch die Feuchtigkeit solubilisiert bzw. mobilisiert. Im Ergebnis werden die vorher räumlich getrennten Komponenten Indikator und Aktivator zueinander geführt. Beim Zusammentreffen dieser beiden Komponenten läuft eine chemische oder physikalische Reaktion ab, die zu einem Farbumschlag führt. Dieser Farbumschlag dient zur Anzeige der Erwärmung des Produkts auf eine Temperatur über der Temperatur bei der das Kühlgut beginnt aufzutauen.

Die Empfindlichkeit der erfindungsgemäßen Vorrichtung kann gesteigert werden indem Materialien mit besonders ausgeprägter Hygroskopie eingesetzt werden (z.B. als Matrixmaterial der nachfolgend näher erläuterten Indikator- und/oder Aktivatorschicht). Dieser Maßnahme sind jedoch Grenzen gesetzt durch die erforderliche Lagerstabilität. Besonders hygroskopische Materialien werden bereits bei kurzer Lagerung bei mittleren Feuchtigkeitsbedingungen eine große Menge Feuchtigkeit "ziehen" und so eine ungewünschte vorzeitige Farbreaktion auslösen.

Die Funktionsweise der erfindungsgemäßen Vorrichtung beruht auf der beim Auftauen aus dem Kühlgut freigesetzten Feuchtigkeit. Folglich ist es bei der erfindungsgemäßen Vorrichtung weder erforderlich noch vorgesehen, dass Feuchtigkeitsreservoirs in einer oder mehreren der Schichten der erfindungsgemäßen Vorrichtung vorliegen.

Die erforderliche Dauer der Überschreitung der minimalen Auftautemperatur des Kühlguts bis zum Farbumschlag kann durch geeignete Wahl der eingesetzten Schichtmaterialien bzw. deren Dicken eingestellt werden, wobei erfindungsgemäß zumindest eine der Schichten ein Cellulosederivat ausgewählt aus Hydroxypropylmethylcellulose (HPMC), Methylcellulose (MC), Hydroproxypropylcellulose (HPC), Carboxymethylcellulose (CMC) und deren Mischungen umfasst, bevorzugt HPMC.

Die erfindungsgemäße Vorrichtung zeichnet sich dadurch aus, dass keine Anpassung der darunter liegenden Produktverpackung notwendig ist (sofern diese aus Karton oder einem anderen für Feuchtigkeit durchlässigen Material besteht). Insbesondere ist keine Öffnung in der Produktverpackung und auch kein "Docht" durch die Produktverpackung erforderlich.

Ein weiterer wesentlicher Aspekt der vorliegenden Erfindung ist die Möglichkeit, die erfindungsgemäße Vorrichtung schichtweise mit einem gängigen Druckverfahren wie z.B. Offset- oder Flexodruckverfahren herzustellen.

Ein weiterer wesentlicher Aspekt der vorliegenden Erfindung ist die Möglichkeit sehr dünne Anzeigevorrichtungen bereitzustellen, da keine Flüssigkeitsreservoirs oder dergleichen erforderlich bzw. vorgesehen sind. So liegt die Stärke einer gesamten erfindungsgemäßen Vorrichtung, umfassend Deckschicht, Haftschicht, Indikatorschicht, Trennschicht und Aktivatorschicht, vorzugsweise im Bereich von 50-200 µm, stärker bevorzugt im Bereich von 60-180 µm und besonders bevorzugt im Bereich 80-160 µm.

Diese bevorzugten Bereiche gelten auch für die gemeinsame Stärke (Dicke) der oben genannten Schichten als Bestandteil solcher erfindungsgemäßer Vorrichtungen, die noch weitere Schichten, die zur Gesamtstärke beitragen, aufweisen. Für die gesamte Stärke derartiger erfindungsgemäßer Vorrichtungen kommt zu den oben genannten bevorzugten Bereichen noch die Dicke der zusätzlich vorhandenen Schicht oder Schichten hinzu.

### 5.3. Schichtenfolge

Wie vorstehend erläutert beruht die vorliegende Erfindung auf einer räumlichen Trennung von Indikator und Aktivator mittels Bereitstellung dieser Komponenten in getrennten Schichten.

Weitere wesentliche Elemente der erfindungsgemäßen Vorrichtung sind eine Deckschicht (1), welche die Vorrichtung zur Außenatmosphäre hin gegen Feuchtigkeit schützt, sowie eine Verzögerungsschicht (4), die den Feuchtigkeitstransport vom Kühlgut zu Aktivator- und Indikatorschicht reguliert. Die Verzögerungsschicht kann auch aus der Produktverpackung bestehen, auf die die Vorrichtung aufgebracht wird. In diesem Falle kann auf eine separate Verzögerungsschicht verzichtet werden. Alle weiteren Schichten sind für die ordnungsgemäße Funktion der Vorrichtung nicht zwingend erforderlich und daher optional. In ihrer einfachsten Ausführungsform ist die erfindungsgemäße Vorrichtung daher durch die folgenden Schichten gekennzeichnet. Die nachfolgend angegebene Reihenfolge der Schichten (beginnend von der dem Kühlgut entfernt liegenden Seite) stellt eine bevorzugte Ausführungsform der erfindungsgemäßen Vorrichtung dar:
(a) Deckschicht (1);
(b) Indiktorschicht (2);
(c) Aktivatorschicht (3);
(d) optionale Verzögerungsschicht (4).

Diese Schichtreihenfolge ist jedoch nicht wesentlich für eine erfolgreiche Ausführung der Erfindung. Es sind lediglich die folgenden Randbedingungen hinsichtlich der Schichtreihenfolge zu erfüllen:
(i) Die Deckschicht muss im Verhältnis zu Indikator-, Aktivator- und Verzögerungsschicht am weitesten vom Kühlgut entfernt sein;
(ii) Zumindest die Indikatorschicht muss weiter vom Kühlgut entfernt sein als die ggf. vorliegende Verzögerungsschicht.

Somit kann im Falle des Vorliegens der Verzögerungsschicht die Position der Aktivatorschicht zwischen Deck- und Indikatorschicht liegen, zwischen Indikator- und Verzögerungssschicht, oder unterhalb der Verzögerungsschicht. Es ergeben somit sich die folgenden weiteren Schichtreihenfolgen zusätzlich zur obigen Schichtreihenfolge (1)-(2)-(3)-(4): (1)-(3)-(2)-(4) und (1)-(2)-(4)-(3).

Weitere optionale Schichten können eingeführt werden soweit dies die erfindungsgemäße Funktion nicht beeinträchtigt. Insbesondere können die folgenden weiteren Schichten vorgesehen werden:
Haftschichten (5, 6, 7) können eingefügt werden um den Zusammenhalt der Schichtenfolge zu gewährleisten. Insbesondere bietet es sich bei der oben dargestellten Schichtreihenfolge an
- eine obere Haftschicht (5) direkt unter der Deckschicht (1) vorzusehen;
- eine mittlere Haftschicht (6) zwischen Indikatorschicht (2) und Aktivatorschicht (3) vorzusehen; und/oder
- eine untere Haftschicht (7) unterhalb der Verzögerungsschicht (4) vorzusehen.

Als weitere optionale Schicht kann eine Trennschicht (8) zwischen Indikatorschicht (2) und Aktivatorschicht (3) vorgesehen werden, um so einen direkten Kontakt von Aktivator und Indikator an der Grenzfläche zwischen den Schichten zu vermeiden und eine weitere Möglichkeit zur Regulierung der Aktivierungsdauer bis zum Farbumschlag bereitzustellen. Besagte Trennschicht (8) kann überdies die Herstellung der erfindungsgemäßen Vorrichtung vereinfachen.

Weitere Schichten sind ebenfalls denkbar wie z.B. Trennschichten zwischen anderen Schichten der erfindungsgemäßen Vorrichtung und/oder weitere Indikator- und/oder Aktivatorschichten, die beispielsweise zusätzliche Farbumschläge unter bestimmten Bedingungen hervorrufen können. Ebenso ist es nicht ausgeschlossen, mehrere der hier beschriebenen Schichten mehrfach vorzusehen. Es könnte beispielsweise in Betracht gezogen werden, die in dieser Anmeldung beschriebenen Schichtenfolgen zwei- oder mehrfach übereinander vorzusehen. Ein derartiger "Sandwich Aufbau" unter Verwendung zweier oder mehrerer Indikator- und/oder Aktivatorschichten führt zu einem graduellen oder schrittweisen Farbumschlag, welcher gestattet zwischen kurzzeitigen und längerfristigen Unterbrechungen der Kühlkette zu unterscheiden.

Weitere wesentliche Ausführungsformen der vorliegenden Erfindung sind durch die folgenden Schichtreihenfolgen gekennzeichnet:
(a) Deckschicht (1)
   (oH) Obere Haftschicht (5)
(b) Indikatorschicht (2)
   (mH) Mittlere Haftschicht (6)
(c) Aktivatorschicht (3)
(d) Verzögerungsschicht (4)
   (uH) Untere Haftschicht (5);
sowie
(a) Deckschicht (1)
   (oH) Obere Haftschicht (5)
(b) Indikatorschicht (2)
   (t) Trennschicht (8)
(c) Aktivatorschicht (3)
(d) Verzögerungsschicht (4)
   (uH) Untere Haftschicht (7);

Bei diesen beiden Schichtenabfolgen ist es natürlich möglich, jeweils die untere Haftschicht (7) wegzulassen, jeweils die obere Haftschicht (5) wegzulassen oder gar sowohl die untere als auch die obere Haftschicht (5, 7) wegzulassen.

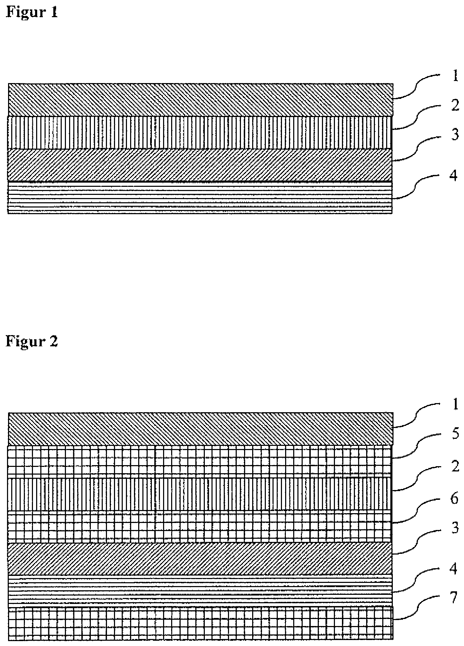

**Figur 1** stellt die Schichtenabfolge gemäß einer der einfachsten Ausführungsformen der vorliegenden Erfindung dar. Da bei dieser Ausführungsform keine Haftschichten vorgesehen sind, bietet sich diese Ausführungsform insbesondere in den Fällen an, in denen die erfindungsgemäße Vorrichtung in die Produktverpackung integriert werden soll, d.h. bei denen die Deckschicht eine Schicht der Produktverpackung bildet. Alternativ könnte die Schichtabfolge gemäß Figur 1 durch ein aufgeklebtes Produktetikett zusammen gehalten werden. Hierbei muss das Produktetikett im Bereich der Erfindungsgemäßen Vorrichtung transparent sein. Gegebenenfalls wird die Verzögerungsschicht durch eine weiter innen liegende Schicht der Produktverpackung gebildet oder ist auf einer solchen angeordnet. Durch diese Integration der erfindungsgemäßen Vorrichtung in die Produktverpackung kann der gewünschte Zusammenhalt der Schichten auch ohne zwischenliegende Haftschichten gewährleistet werden.

Bei der Schichtenabfolge gemäß der zweiten Ausführungsform werden der Zusammenhalt der Schichten und Integrität der Vorrichtung durch geeignete Haftschichten erzielt. Dies ist in **Figur 2** dargestellt.

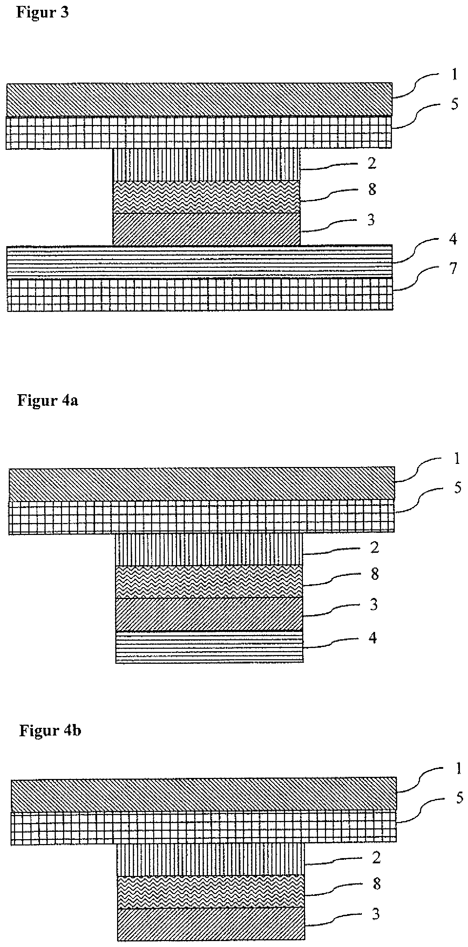

Bei der Ausführungsform gemäß **Figur 3** ist die mittlere Haftschicht durch eine Trennschicht (8) ersetzt. Der Zusammenhalt der Schichten wird gewährleistet durch eine breitere Ausgestaltung der Deckschicht (1) und der oberen Haftschicht (5), welche außerhalb des von Indikatorschicht (2) und Aktivatorschicht (3) bedeckten Bereichs einen direkten Kontakt und Zusammenhalt mit der Verzögerungsschicht (4) ermöglicht. Bei der in **Figur 3** dargestellten Schichtenabfolge ist die Trennschicht (8) optional, d.h. eine weitere Ausführungsform betrifft die gleiche Schichtenabfolge, jedoch unter Abwesenheit der Trennschicht.

**Figur 4a** stellt die Schichtenabfolge einer weiteren Ausführungsform der vorliegenden Erfindung dar. In diesem Fall liegt lediglich eine einzige Haftschicht, nämlich die obere Haftschicht (5) zwischen Deckschicht (1) und Indikatorschicht (2) vor. Der Zusammenhalt der Schichten und damit der Integrität der Vorrichtung werden gewährleistet durch eine größere Dimensionierung der Deckschicht sowie der oberen Haftschicht (5). Die über

Indikatorschicht (2), Aktivatorschicht (3) und Verzögerungsschicht (4) hinaus reichende obere Haftschicht kommt in direkten Kontakt mit der Produktverpackung und bildet eine stabile Haftverbindung mit dieser. Diese Ausführungsform ist erneut mit der optionalen Trennschicht (8) dargestellt.

**Figur 4b** stellt eine Variante der Ausführungsform gemäß **Figur 4a** dar. Bei dieser Variante ist die Verzögerungsschicht (4) weggelassen worden.

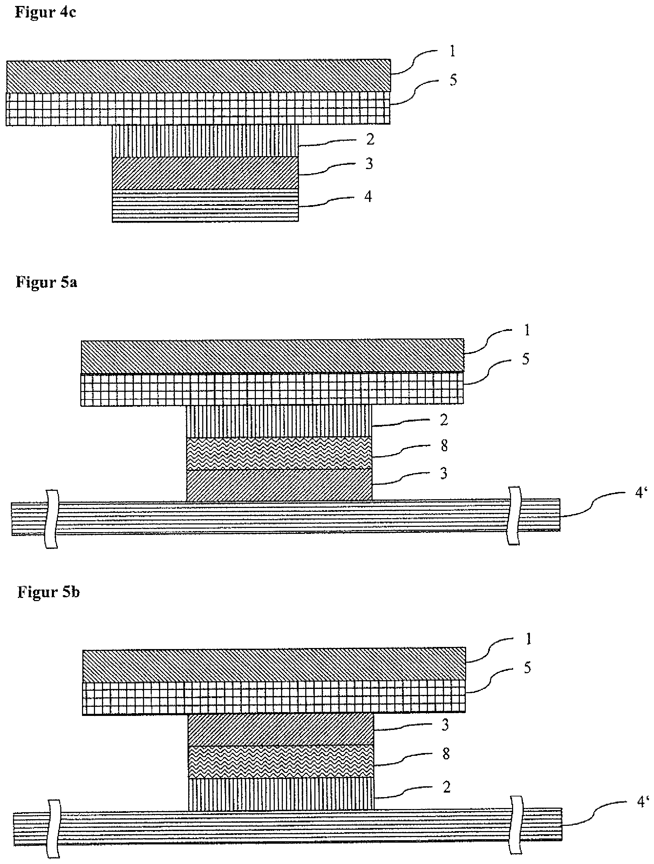

**Figur 4c** stellt eine Variante der Ausführungsform gemäß **Figur 4a** dar. Bei dieser Variante ist die Trennschicht (8) weggelassen worden.

**Figur 5a** stellt eine Variante der Ausführungsform gemäß **Figur 4a** dar. Bei dieser Variante ist die Verzögerungsschicht (4) in die Produktverpackung integriert, d.h. die Verzögerungsschicht (4) wird ausschließlich durch eine Schicht der Produktverpackung gebildet. In diesem Fall findet die Haftverbindung zwischen oberer Haftschicht (5) und Verzögerungsschicht (4, Schicht der Produktverpackung) statt.

**Figur 5b** stellt eine weitere Variante dieser Ausführungsform dar. Die Schichtabfolge entspricht jener von Figur 5a, wobei jedoch Indikatorschicht (2) und Aktivatorschicht (3) miteinander vertauscht sind.

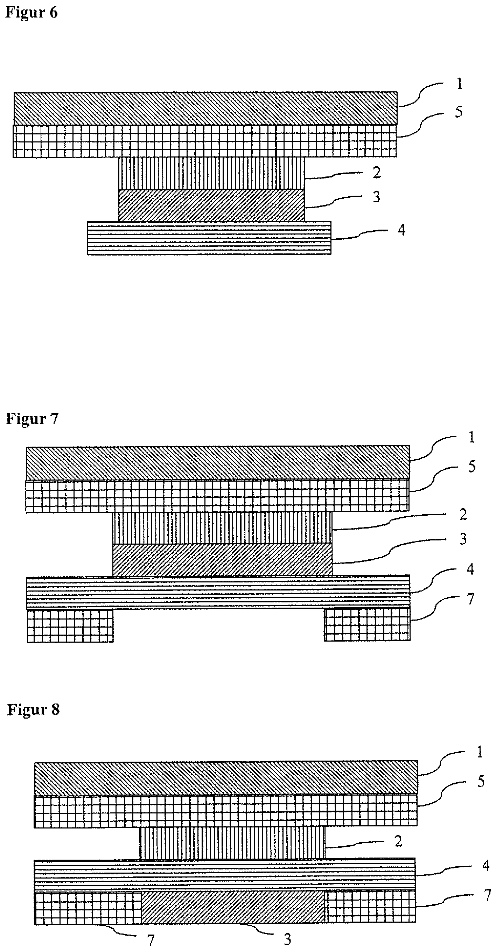

**Figur 6** zeigt eine weitere Variante der Ausführungsformen der Figuren 4a und 5a dar. Bei dieser Variante liegt zusätzlich zu der Produktverpackung eine separate Verzögerungsschicht (4) vor. Diese Schicht ist etwas breiter ausgebildet als die darüber liegenden Schichten. Der Zusammenhalt der Schichten wird durch den Kontakt zwischen oberer Haftschicht (5) und dem überstehenden Bereich der Verzögerungsschicht (4) gewährleistet. Der über die Verzögerungsschicht (4) überstehende Bereich der Haftschicht (5) gestattet überdies ein Fixieren der Vorrichtung auf der Produktverpackung (welche als zusätzliche Verzögerungsschicht dient; nicht in Figur 6 dargestellt).

**Figur 7** stellt eine Variante der Ausführungsform gemäß Figur 3 dar. Bei dieser Variante wurde die optionale Trennschicht (8) weggelassen. Überdies ist die untere Haftschicht (7) lediglich in den Bereichen außerhalb der darüber liegenden Indikatorschicht (2) und Aktivatorschicht (3) angeordnet. Diese Variante gestattet auch die Verwendung von Haftklebern, welche keine oder eine sehr geringe Durchlässigkeit für Feuchtigkeit bzw. Wasserdampf aufweisen.

**Figur 8** betrifft eine Ausführungsform, bei der die Aktivatorschicht (3) unterhalb der Verzögerungsschicht (4) angeordnet ist. In diesem Fall migriert der Aktivator gemeinsam mit der Feuchtigkeit durch die Verzögerungsschicht (4) zur Indikatorschicht (5).

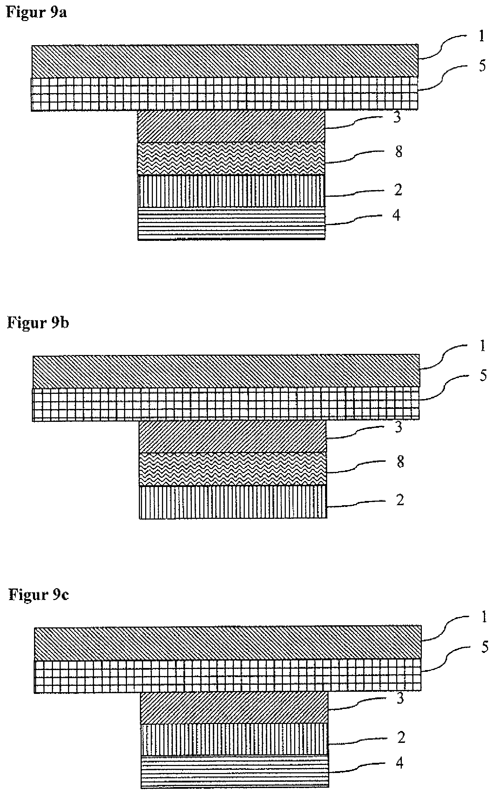

**Figuren 9a, 9b** und **9c** stellen weitere Ausführungsformen dar, bei der die Aktivatorschicht an anderer Stelle angeordnet ist: Diese Ausführungsformen entsprechen jenen von Figuren 4a, 4b und 4c, wobei lediglich jeweils die Indikatorschicht (2) und die Aktivatorschicht (3) miteinander vertauscht wurden.

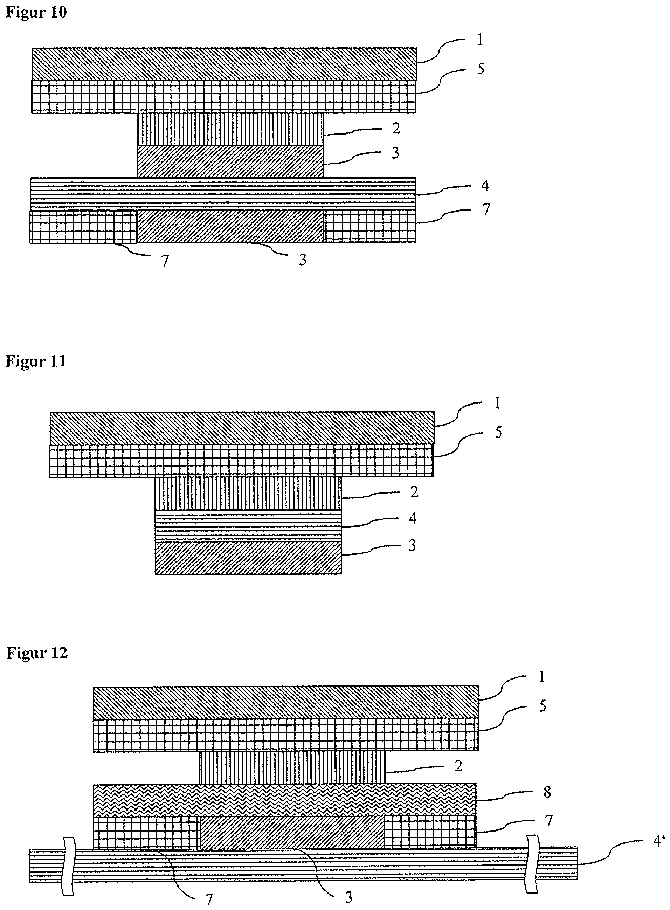

**Figur 10** zeigt eine Ausführungsform gemäß Figur 7, welche zusätzlich eine zweite Aktivatorschicht (3) unterhalb der Verzögerungsschicht (4) und innerhalb der durch die untere Haftschicht (7) abgedeckten Bereiche aufweist. Die Bereitstellung einer zweiten Aktivatorschicht hat den Vorteil, dass der Farbumschlag graduell bzw. stufenweise stattfindet. Sie ist daher in den Fällen bevorzugt, in denen die Anzeige eine Unterscheidung zwischen kurzen und länger andauernden Unterbrechungen der Kühlkette gestatten soll. Natürlich kann eine zweite Aktivatorschicht auch an anderer Position der Vorrichtung, z.B. zwischen Indikatorschicht (2) und oberer Haftschicht (5), bereitgestellt werden.

**Figur 11** stellt eine weitere Variation der Ausführungsformen gemäß Figuren 4a und 9a dar: In der Ausführungsform von Figur 11 ist die Aktivatorschicht (3) unterhalb der Verzögerungsschicht (4) angeordnet. Bei dieser Schichtreihenfolge kann die Verzögerungsschicht (4) als Trennschicht agieren, und so die in Figuren 4a und 9a dargestellte Trennschicht ersetzen.

**Figur 12** betrifft eine weitere Ausführungsform, bei der die Produktverpackung als Verzögerungsschicht (4) dient, und bei der eine Trennschicht (8) zwischen Indikatorschicht (2) und Aktivatorschicht (3) angeordnet ist. Bei dieser Ausführungsform ragt die Trennschicht überdies über Indikatorschicht (2) und Aktivatorschicht (3) hinaus. Dies gestattet einen direkten Kontakt zwischen oberer Haftschicht (5) und Trennschicht (8), der zur Integrität der Vorrichtung beiträgt. Eine weitere untere Haftschicht (7) ist zwischen Trennschicht (8) und Produktverpackung/Verzögerungsschicht (4) angeordnet, so dass sie die Aktivatorschicht (3) teilweise oder vollständig umschließt.

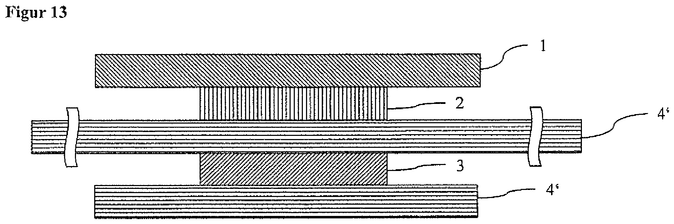

**Figur 13** stellt eine weitere Ausführungsform der erfindungsgemäßen Vorrichtung dar. Bei dieser Ausführungsform werden zwei Verzögerungsschichten (4) bereitgestellt. Eine erste Verzögerungsschicht (4) zwischen Indikatorschicht (2) und Aktivatorschicht (3) wird durch die Produktverpackung gebildet. Diese Verzögerungsschicht (4) dient gleichzeitig als Trennschicht. Eine zweite Verzögerungsschicht (4) befindet sich unterhalb der Aktivatorschicht (3). Dies kann z.B. ein wasserdampfdurchlässiger dünner Schutzfilm sein, wie er üblicherweise im Inneren von Lebensmittelverpackungen eingesetzt wird. Die Vorrichtung dieser Ausführungsform lässt sich besonders einfach auf einmal mit der übrigen Produktverpackung herstellen.

Die in Figur 13 dargestellten Verzögerungsschichten kommen natürlich auch bei allen anderen Vorrichtungen gemäß der vorliegenden Erfindung zum Einsatz sofern die Erfindung auf entsprechend ausgebildeten Produktverpackungen aufgebracht wird. Es ist jeweils die gesamte Verzögerungswirkung, die durch alle Verzögerungsschichten einschließlich der Produktverpackung verursacht wird, zu berücksichtigen.

Die in Figuren 1 bis 13 dargestellten Vorrichtungen (d.h. dargestellte Schichtenfolgen und weitere Konstruktionsmerkmale) sind im Rahmen der vorliegenden Erfindung bevorzugt. Besonders bevorzugt sind die in Figuren 4a-c, 5a, 5b und 9a-c dargestellten Vorrichtungen.

### 5.4. Deckschicht

Die Deckschicht hat die folgenden Funktionen:
- Die Deckschicht verhindert, dass Feuchtigkeit von außen zu der Indikatorschicht und/oder Aktivatorschicht dringt.
- Die Deckschicht weist ausreichende Transparenz auf um einen Farbumschlag in der Indikatorschicht von außen sichtbar zu machen.
- Die Deckschicht gestattet eine weitere Kennzeichnung der erfindungsgemäßen Anzeigevorrichtung, z.B. durch Aufbringen eines Logos.

Als Deckschicht können alle Folienmaterialien eingesetzt werden, welche geeignet sind, die oben genannten Anforderungen zu erfüllen. Hierbei sind die beiden erstgenannten Anforderungen von gleicher Priorität, während die Möglichkeit zum Aufbringen eines Logos von untergeordneter Bedeutung ist. Somit sind alle transparenten Folien einsetzbar, welche keine oder eine so geringe Durchlässigkeit für Feuchtigkeit aufweisen, dass dies keinen Einfluss auf die Funktionstüchtigkeit der erfindungsgemäßen Vorrichtung hat. Beispielsweise können Deckschichten eingesetzt werden, bei denen der Feuchtigkeitsdurchlass so gering ist, dass bei einer Lagerung der erfindungsgemäßen Vorrichtung über 1 Jahr bei 25°C und 75% relativer Luftfeuchtigkeit die in diesem Zeitraum eindringende Feuchtigkeitsmenge keinen mit dem bloßen Auge erkennbaren Einfluss auf die Funktion der Vorrichtung hat. Dies bedeutet, dass beispielsweise eine Folie aus Polypropylen (PP) der Stärke 50 µm und mehr, bevorzugt 60 µm und mehr, eingesetzt werden kann. Ebenfalls einsetzbar sind andere Folienmaterialien wie z.B. hochdichtes Polyethylen (HDPE) mit vergleichbarer Wasserdampfdurchlässigkeit. Bei Materialien mit geringerer Wasserdampfdurchlässigkeit ist es natürlich möglich, die Stärke der Folie entsprechend zu senken. Umgekehrt können auch Materialien mit höherer Wasserdampfdurchlässigkeit eingesetzt werden, sofern die Folienstärke entsprechend angepasst wird. Hierbei ist natürlich auf ausreichende Transparenz zu achten. Ein weiteres geeignetes Folienmaterial ist Polyvinylidenchlorid, da dessen Wasserdampfdurchlässigkeit um etwa eine Größenordnung niedriger ist als die von Polypropylen. Verwendbar sind auch biologisch abbaubare Folien auf Grundlage von Stärke oder Cellulose, die ebenfalls die Anforderungen an Transparenz und Undurchlässigkeit gegenüber Feuchtigkeit erfüllen.

Natürlich können auch Deckschichten eingesetzt werden, die ihrerseits aus mehreren Lagen verschiedener Kunststoffe zusammengesetzt sind (soweit die oben genannten Anforderungen durch die mehrlagigen Deckschichten erfüllt werden).

Als weitere Alternative kann die Deckschicht durch Auftragen eines für Feuchtigkeit undurchlässigen Schutzlacks gebildet werden. In diesem Fall sind die oben genannten Anforderungen bezüglich Transparenz und Wasserdampfdurchlässigkeit in gleicher Weise an die aus Schutzlack gebildete Deckschicht zu stellen. Die Dicke des Schutzlacks ist entsprechend anzupassen. Geeignete Materialien für den Schutzlack sind durch Polysiloxane gebildete Silicone sowie durch polymere Kunstharze gebildete Lacke.

Ebenfalls möglich ist eine Kombination dieses Schutzlacks mit den oben genannten Folien. In diesem Fall muss natürlich die so gebildete Kombination die obigen Anforderungen an Transparenz und Wasserdampfdurchlässigkeit erfüllen.

Bevorzugte Deckschicht ist eine Folie aus Polypropylen mit einer Stärke im Bereich von 40-80 µm, stärker bevorzugt ca. 60 µm.

### 5.5. Obere Haftschicht

Die optionale obere Haftschicht kann durch jeden beliebigen Klebstoff gebildet werden. Bevorzugt werden Haftkleber (pressure-sensitive adhesives) eingesetzt. Geeignete Haftkleber sind beispielsweise in dem Standardwerk "Handbook of Pressure-Sensitive Adhesive Technology" von Donatas Satas (van Nostrand, New York 1989) erläutert. Hierzu gehören insbesondere Haftkleber auf Acrylat-, Naturkautschuk-, Synthesekautschuk-, Silikon- oder EVA-Basis. Bevorzugt sind Haftkleber auf natürlicher Basis wie Kleber auf Casein-, Gelatine- und Stärkebasis. Denkbar sind auch Heißkleber und Flexodruckkleber wie z.B. Novarad® RCL-6015 des Herstellers Novamelt® sowie andere UV-härtbare Monomer-/Oligomer-Zusammensetzungen auf Acrylat-Urethan-Basis oder Acrylat-Epoxid-Basis.

Die Haftschicht wird in einer Stärke von vorzugsweise 30-80 µm, stärker bevorzugt 40-60 µm, eingesetzt. Insbesondere die oben genannten Flexodruckkleber werden typischwerweise in Mengen von 1-50 g/m², bevorzugt 5-40 g/m², stärker bevorzugt 10-30 g/m² aufgetragen.

### 5.6. Indikatorschicht

Die Indikatorschicht ist durch das Vorliegen von zumindest einem Indikator gekennzeichnet. Im Zusammenhang mit der vorliegenden Erfindung bezieht sich der Begriff "Indikator" auf jegliche Substanz oder Mischung von Substanzen, die durch chemische Reaktion oder andere Wechselwirkung mit einem geeigneten Aktivator einen Farbumschlag zeigt. Ein typischer Vertreter dieser Substanzen sind die sogenannten pH-Indikatoren. PH-Indikatoren zeigen einen Farbumschlag sobald sich der pH-Wert so verändert, dass ein für den jeweiligen pH-Indikator charakteristischer Umschlagwert überschritten wird. Ist beispielsweise der pH-Indikator im basischen Milieu (pH>7) blau und im sauren Milieu (pH<7) rot, so kann ein Farbumschlag erfolgen, wenn das Milieu in der Indikatorschicht basisch ist und als Aktivator eine Säure eingesetzt wird. Gleichermaßen ist es möglich, den besagten pH-Indikator in einem sauren Milieu einzusetzen und als Aktivator eine Base zu verwenden.

Natürlich ist es erforderlich, den pH-Indikator, das umgebende Milieu, sowie den Aktivator aufeinander abzustimmen um zu gewährleisten, dass der gewünschte Farbumschlag bei Migration des Aktivators in die Indikatorschicht erfolgt. Bei pH-Indikatoren kann dies durch geeignete Wahl des pH-Indikators (im Hinblick auf den pH-Wert beim Farbumschlag), Einstellung des pH Werts der Indikatorschicht und passende Wahl des Aktivators erfolgen.

Unter den pH-Indikatoren gibt es Farbstoffe natürlichen Ursprungs sowie künstliche Farbstoffe. Bevorzugt sind Naturfarbstoffe, die beispielsweise aus Pflanzen wie Gemüse oder Obst gewonnen werden können. Hierzu gehören unter anderem die Flavonoide wie z.B. die Anthocyane. Bevorzugt sind hierbei die Anthocyanidine. Besonders bevorzugt ist die Verwendung von Cyanidin. Ebenso können Delphinidin, Malvidin, Peonidin und Petunidin genannt werden. Mischungen von Farbstoffen sind ebenfalls einsetzbar. Hierbei ist jedoch darauf zu achten, dass das Farbumschlagverhalten der einzelnen Farbstoffe so aufeinander abgestimmt ist, dass sich unter den gegebenen Bedingungen (Anwesenheit von Aktivator und Feuchtigkeit ggf. in Gegenwart einer Matrix und weiterer Bestandteile) ein klar erkennbarer Farbumschlag vollzieht.

Neben pH-Indikatoren können auch andere Substanzen, die einen Aktivator-induzierten Farbumschlag aufweisen, eingesetzt werden. Hierbei sind insbesondere Redoxindikatoren zu nennen. Hierbei handelt es sich um Farbstoffe, die bei Reduktion und/oder Oxidation einen Farbumschlag zeigen. Typische Beispiele sind Ferroin oder Methylenblau. Eine umfassende Aufstellung von Redoxindikatoren findet sich auf der englischen Version von Wikipedia unter dem Eintrag "Redox indicator" (Stand: September 2012). Entsprechend können als Aktivatorsubstanzen geeignete Reduktionsmittel und/oder Oxidationsmittel eingesetzt werden.

Eine weitere Klasse geeigneter Indikatoren sind Substanzen, die durch Komplexbildung einen Farbumschlag zeigen. Ein einfaches Beispiel hierfür ist wasserfreies Kupfersulfat CuSO₄, weiß, welches in Gegenwart von Feuchtigkeit die blaue Farbe des Komplexes [Cu(H₂O)₆] SO₄ annimmt. In diesem einfachen Fall fungiert die Feuchtigkeit selbst als Aktivator, so dass (ausnahmsweise) auf die Aktivatorschicht verzichtet werden kann. In allen Fällen, in denen farbige Komplexe mit anderen Liganden als H₂O gebildet werden, dient der betreffende Ligand als Aktivator und wird in der Aktivatorschicht bereitgestellt.

Bevorzugtes Indikatormaterial sind pH-Indikatoren und insbesondere die oben genannten Anthocyanidine sowie ganz besonders bevorzugt Cyanidin.

Die Indikatorschicht kann neben der Indikatorsubstanz weitere optionale Bestandteile umfassen. Geeignete weitere optionale Bestandteile können insbesondere aus den folgenden Komponenten ausgewählt werden:
- Matrixmaterialien wie z.B. Agar-Agar, Cellulose, Cellulosederivate wie Hydroxypropylmethylcellulose (HPMC), Methylcellulose (MC), Hydroproxypropylcellulose (HPC), Carboxymethylcellulose (CMC) oder deren Mischungen, Stärke, Gummi arabicum, Guarkernmehl, Gelatine und Pfeilwurzelstärke; bevorzugt sind Cellulose sowie HPMC. Geeignet ist weiterhin Polyethylenglykol. Erfindungsgemäß umfasst zumindest eine der Schichten ein Cellulosederivat ausgewählt aus Hydroxypropylmethylcellulose (HPMC), Methylcellulose (MC), Hydroproxypropylcellulose (HPC), Carboxymethylcellulose (CMC) und deren Mischungen, bevorzugt HPMC. Dies kann die Indikatorschicht sein. Sofern die erfindungsgemäße Vorrichtung mit dem bevorzugten Druckverfahren hergestellt wird, ist darauf zu achten, dass die Viskosität der eingesetzten Matrixmaterialien dem Druckverfahren angepasst wird. Dies kann durch geeignete Wahl der Kettenlänge der polymeren Matrixmaterialien erfolgen. Ebenso ist es möglich eine homogene oder heterogene Mischung des Matrixmaterials mit einem geeigneten Lösungsmittel mit geeigneter Viskosität einzusetzen. Denkbar ist auch die Verwendung eines textilen Gewebes oder Vlieses. Wenn der Indikator auf ein Gewebe oder Vlies aufgebracht wird fungiert besagtes Gewebe oder Vlies eher als Träger denn als den Indikator umschließende Matrix. In diesen Fällen ist das für Gewebe oder Vlies einzusetzende Material keiner weiteren Einschränkung unterworfen (außer, dass es gegenüber Indikator und Aktivator inert sein soll). Ein geeignetes Material ist beispielsweise Cellulose, also z.B. eine Lage eines Papiertaschentuchs.

- Substanzen, die das Medium auf geeignete Ausgangsbedingungen einstellen, um eine stabile Färbung des Indikators (vor dem Farbumschlag) zu gewährleisten; beispielweise kann bei Verwendung eines pH-Indikators und bei Verwendung einer Säure als Aktivator das Medium mit Basen wie Na₂CO₃, NaHCO₃, CaO oder CaCO₃ auf einen alkalischen pH-Wert eingestellt werden; eine Einstellung auf einen sauren pH-Wert kann mit Säuren wie z.B. Milch-, Oxal-, Wein- und Zitronensäure erfolgen;
- Hygroskopische Materialien einschließlich hygroskopischer Polymere wie z.B. Acrylsäure-Acrylat-Polymere und hygroskopischer Salze wie z.B. Magnesiumchlorid, Kaliumchlorid und Calciumchlorid, die den Farbumschlag beeinflussen (z.B. beschleunigen) können;
- Salze zur Senkung des Schmelzpunktes von Wasser. Der Einsatz von Salzen zur Senkung des Schmelzpunktes von Wasser bietet sich an wenn die erfindungsgemäße Vorrichtung auf salzhaltigen Kühlgütern (z.B. Brezeln) zum Einsatz kommen soll. Durch das Vorlegen von Salz in der Indikatorschicht (sowie den weiter innen liegenden Schichten der erfindungsgemäßen Vorrichtung) kann die erfindungsgemäße Vorrichtung bereits bei Temperaturen unter 0°C aktiviert werden, bei denen auch das Kühlgut beginnt aufzutauen. Da es sich bei der Schmelzpunkterniedrigung um ein kolligatives Phänomen handelt, können beliebige Salze zum Einsatz kommen. Bevorzugt sind nicht toxische Salze, wie z.B. NaCl.
- Stabilistoren, wie z.B. Kaliumsorbat zur Schimmelunterdrückung; weitere Konservierungsstoffe umfassen Calciumchlorid und Ethanol; der Einsatz derartiger Stabilisatoren ist insbesondere bei Verwendung natürlicher Farbstoffe bevorzugt.

Die aufzutragende Menge an Indikatorfarbstoff liegt typischerweise im Bereich von 0.1 bis 100 g/m², bevorzugt von 1 bis 40 g/m², besonders bevorzugt von 4 bis 12 g/m². Die aufgetragene Menge an Indikator beeinflusst die Geschwindigkeit und Intensität des Farbumschlags. Ein kräftiger Farbauftrag (d.h. Auftragsmengen in der oberen Hälfte der oben angegebenen Bereiche) erleichtert überdies die Erkennbarkeit des Farbumschlags. Andererseits kann ein kräftiger Farbauftrag die Trocknung im Rahmen des Herstellungsverfahrens erschweren. Es hat sich als vorteilhaft erwiesen, anstelle von einer kräftigen Indikatorschicht mehrere dünne Schichten aufzutragen und zu trocknen bevor die jeweils nachfolgende Indikatorschicht aufgetragen wird. Beispielsweise können 2-40 Schichten aufgetragen werden. Bevorzugt sind 4-10 Schichten, stärker bevorzugt 6-8 Schichten. Die Leichtigkeit der Trocknung ist natürlich auch von der Zusammensetzung der pH-Indikatorschicht (z.B. hygroskopischer Eigenschaften der Bestandteile und Wassergehalt) abhängig. Durch geeignete Einstellung des Wassergehalts, Wahl des Matrixmaterials und der Auftragsmenge pro Schicht kann eine gewünschte Trocknungsgeschwindigkeit eingestellt werden. Bei Verwendung von Druckmaschinen kann die aufgetragene Menge an Indikator auf das Schöpfvolumen der Druckmaschine abgestimmt werden.

### 5.7. Mittlere Haftschicht

Für die mittlere Haftschicht gelten die Angaben in Abschnitt 5.5 zur oberen Haftschicht analog. Bei der mittleren Haftschicht ist jedoch darauf zu achten, dass ein ausreichender Feuchtigkeitstransport vom Kühlgut zur Indikatorschicht gewährleistet ist.

Die gewünschte Eignung zum Feuchtigkeitstransport kann einerseits durch Wahl geeigneter Haftmittel/Klebstoffe erzielt werden. Klebstoffe, die in der Lage sind Feuchtigkeit passieren zu lassen, sind insbesondere Klebstoffe auf Stärke- oder Gelatinebasis. Durch Verringerung der Auftragsmenge kann die Feuchtigkeitsdurchlässigkeit von weiteren Klebstoffen, die an sich eine geringere Feuchtigkeitsdurchlässigkeit (bezogen auf gleiche Auftragsmengen) aufweisen, auf ein akzeptables Niveau gebracht werden. Somit kann bei geeigneter Anpassung der Auftragsmenge eine Vielzahl weiterer Klebstoffe zum Einsatz kommen.

Andererseits ist es möglich, in der mittleren Haftschicht Poren bzw. Öffnungen vorzusehen, in denen kein Klebstoff vorliegt und durch die die Feuchtigkeit ungehindert in die Indikatorschicht migrieren kann. Form und Größe der Öffnungen sind nicht näher festgelegt soweit gewährleistet ist, dass die Gesamtfläche der Öffnungen ausreicht um den für den gewünschten Farbumschlag erforderlichen Feuchtigkeitstransport zu gewährleisten.

### 5.8. Trennschicht

Das Vorsehen einer Trennschicht zwischen Indikatorschicht und Aktivatorschicht ist insbesondere dann empfehlenswert, wenn die erfindungsgemäße Vorrichtung durch Auftragen von Schicht für Schicht hergestellt werden soll.

In diesem Falle, könnte bei Fehlen der Trennschicht eine direkte Beschichtung der Aktivatorschicht durch das (noch feuchte) Material der Indikatorschicht zu einer Farbreaktion an der Grenzfläche führen bevor die Indikatorschicht ausreichend getrocknet ist. Um eine solche vorzeitige Grenzflächenreaktion zu vermeiden, können Indikatorschicht und Aktivatorschicht durch besagte Trennschicht voneinander separiert und so die vorzeitige Farbreaktion vermieden werden.

Die Trennschicht muss in der Lage sein, geringe Mengen Feuchtigkeit aufzunehmen und zu speichern ohne diese vor dem nachfolgenden Trocknungsgang an die Nachbarschicht weiterzugeben.

Vor dem Auftragen der nachfolgenden Schicht muss die Trennschicht trocken sein. Das bedeutet, dass die Trennschicht ggf. getrocknet werden muss. Die Trennschicht kann auch in Form mehrerer getrennter Lagen aufgebracht werden.

Bei geeigneter Wahl des Klebstoffes kann die oben genannte mittlere Haftschicht als Trennschicht fungieren. Alternativ hierzu könnten Kunststofffolien mit geeigneter Feuchtigkeitsdurchlässigkeit eingesetzt werden. Ebenso ist der Einsatz von einer aus Stärke gebildeten Schicht denkbar. Bevorzugt sind insbesondere Trennschichten, die aus Gelatine oder Papier (Cellulose) gebildet sind. Die Verwendung eines Gewebes oder Vlieses ist ebenfalls möglich. Auch in diesem Fall ist das für Gewebe oder Vlies einzusetzende Material keiner weiteren Einschränkung unterworfen (außer dass es gegenüber Indikator und Aktivator inert sein soll). Cellulose ist bevorzugt. Weitere für die Trennschicht geeignete Materialien sind Wachse und insbesondere niedrig (<25°C) schmelzende Wachse. Fette und insbesondere niedrig (<25°C) schmelzende Fette, Polyethylenglykol, Dextrin, Kasein, Stärke, Polyvinylalkohol, Gelatine, Polysaccharide wie Agar-Agar, Gummi arabicum oder Pektin, sowie Mischungen davon. Geeignet sind neben Cellulose auch Cellulosederivate wie Hydroxypropylmethylcellulose (HPMC), Methylcellulose (MC), Hydroproxypropylcellulose (HPC), Carboxymethylcellulose (CMC) oder deren Mischungen. Bevorzugt ist HPMC.

### 5.9. Aktivatorschicht

Der Aktivator wird so gewählt, dass eine chemische Reaktion oder andere Wechselwirkung mit dem Indikator zu einem Farbumschlag führt. Bei Verwendung von pH-Indikatoren ist der Aktivator entweder eine Säure oder eine Base. Bei Wahl einer Säure muss das Milieu der Indikatorschicht basisch (oder zumindest basischer als der pH-Umschlagspunkt des Indikators) sein. Analog muss bei Verwendung einer Base als Aktivator das Milieu der Indikatorschicht sauer (oder zumindest saurer als der pH-Umschlagspunkt des Indikators) sein.

Bevorzugte Säuren sind Oxalsäure, Milchsäure und Weinsäure. Zitronensäure ist besonders bevorzugt. Bei Verwendung von Basen als Aktivator können wiederum Na₂CO₃, NaHCO₃, CaO oder CaCO₃ Einsatz finden.

Falls Redoxindikatoren eingesetzt werden, gilt das zu pH-Indikatoren Gesagte analog. Dies bedeutet, dass Oxidationsmittel als Aktivatoren eingesetzt werden können, sofern der Redoxindikator im reduzierten Zustand vorliegt. In diesem Fall kann ein reduzierendes Milieu in der Indikatorschicht den Redoxindikator stabilisieren. Umgekehrt ist es möglich, als Aktivator ein Reduktionsmittel einzusetzen sofern der Redoxindikator in der oxidierten Form vorliegt. In diesem Fall kann ein oxidierendes Milieu in der Indikatorschicht den Redoxindikator stabilisieren.

Geeignete Oxidationsmittel umfassen organische Percarbonsäuren und Metallsalze wie MnO₂; geeignete Reduktionsmittel umfassen Ascorbinsäure, Sulfitsalze und Zinn(II)-Salze. Bei der Wahl geeigneter Oxidationsmittel und Reduktionsmittel ist auf ausreichende Stabilität unter den gegebenen Bedingungen zu achten, d.h. es darf über die vorgesehene Lagerungsdauer keine Reaktion mit den übrigen Bestandteilen der Aktivatorschicht erfolgen. Sofern die Vorrichtung für Lebensmittel eingesetzt wird ist überdies darauf zu achten, dass von den eingesetzten Oxidations- und/oder Reduktionsmitteln keine Gesundheitsgefährdung ausgeht.

Diese Substanzen eignen sich sowohl für die Verwendung als Aktivator als auch für die Verwendung zur gewünschten Einstellung des Milieus der Indikatorschicht.

Weitere Bestandteile der Aktivatorschicht sind optional. Es können beispielsweise die zur Indikatorschicht genannten Matrixmaterialien eingesetzt werden. Erfindungsgemäß umfasst zumindest eine der Schichten ein Cellulosederivat ausgewählt aus Hydroxypropylmethylcellulose (HPMC), Methylcellulose (MC), Hydroproxypropylcellulose (HPC), Carboxymethylcellulose (CMC) und deren Mischungen, bevorzugt HPMC. Dies kann die Aktivatorschicht sein. Auch in diesem Fall können Gewebe oder Vliese zum Einsatz kommen. Wiederum ist das für Gewebe oder Vlies einzusetzende Material keiner weiteren Einschränkung unterworfen (außer dass es gegenüber Indikator und Aktivator inert sein soll). Cellulose ist bevorzugt. Ebenfalls bevorzugt ist HPMC.

Zudem kann in die Aktivatorschicht ein Farbstoff aufgenommen werden. Geeignete Farbstoffe sind beispielsweise Titandioxid oder lebensmittelechte Farbstoffe. Durch eine Färbung der Aktivatorschicht, z.B. mit Titandioxid, kann der Kontrast beim Farbumschlag in der Indikatorschicht erhöht werden.

Weiterhin kann es vorteilhaft sein in die Aktivatorschicht hygroskopische Materialien wie hygroskopische Polymere (z.B. Acrylsäure-Acrylat-Polymere) oder hygroskopische Salze (z.B. Magnesiumchlorid, Kaliumchlorid und Calciumchlorid) aufzunehmen.

Die Menge an Aktivator in der Aktivatorschicht beträgt typischerweise 0.1 bis 100 g/m², bevorzugt von 1 bis 40 g/m², besonders bevorzugt von 4 bis 12 g/m². Auch in diesem Fall ist es vorteilhaft, die Aktivatorschicht durch separates Auftragen und Trocknen mehrerer Einzelschichten zu bilden, um so die Trocknung zu erleichtern. Es können 2-30 einzelne Schichten zum Einsatz kommen. Bevorzugt sind Aktivatorschichten, die aus 3-8 Einzelschichten, stärker bevorzugt 4-6 Einzelschichten, gebildet sind.

### 5.10. Verzögerungsschicht

Die Verzögerungsschicht bildet eine Art "Feuchtigkeitspuffer", der eine gewisse Menge an Feuchtigkeit aufnimmt, bevor diese an die Aktivatorschicht weitergegeben wird. Dies hat den Vorteil, dass kein Farbumschlag durch Freisetzung sehr geringer Feuchtigkeitsmengen erfolgt. Hierdurch können falsch-positive Anzeigen z.B. beim Berühren des Indikators durch den Konsumenten vermieden werden.

Die Verzögerungsschicht ist ein optionaler Bestandteil der erfindungsgemäßen Vorrichtung. Die für die erfolgreiche Ausführung der Erfindung erforderliche Verzögerungswirkung kann auch durch weitere Schichten der erfindungsgemäßen Vorrichtung wie z.B. Trenn- oder Haftschichten erzielt werden. Zu berücksichtigen ist auch die durch die Produktverpackung verursachte Verzögerungswirkung.

So kann die Zeitdauer von der ersten Bildung von Feuchtigkeit bis zum Farbumschlag durch geeignete Wahl der Verzögerung verursachenden Schichten (in Bezug auf Vorliegen oder Abwesenheit, eingesetzte Materialien und deren Dicke) unter Berücksichtigung der Verzögerungswirkung der Produktverpackung eingestellt werden. Entscheidend für diese Zeitdauer ist die gesamte Verzögerungswirkung aller Schichten zwischen Produkt und der äußersten für die Farbwirkung relevanten Schicht (d.h. Aktivator- oder Indikatorschicht).

Die für die Verzögerungsschicht einsetzbaren Materialien entsprechen den unter Punkt 5.8 für die Trennschicht genannten Materialien, wie z.B. Wachse. Fette, Polyethylenglykol, Dextrin, etc.. D.h. es können Folien mit ausreichender Feuchtigkeitsdurchlässigkeit eingesetzt werden, eine aus Stärke gebildete Schicht oder, stärker bevorzugt, eine aus Gelatine gebildete Schicht. Besonders bevorzugt ist die Verwendung von Papier oder Karton (d.h. einer Schicht aus Cellulose), z.B. von Papier einer Stärke von 25-80 g/m². Bei der Verwendung von Papier hat sich Zeitungspapier, bzw. Papier vergleichbarer Stärke von ca. 40-60 g/m², insbesondere 50 g/m², als vorteilhaft erwiesen. Falls eine kürzere Umschlagszeitdauer gewünscht ist kann sich die Verwendung von Seidenpapier bzw. Papier vergleichbarer Stärke von ca. 20-30 g/m², insbesondere 25 g/m² als vorteilhaft erweisen.

Die Verwendung von Papier oder Karton ist insbesondere in den Fällen bevorzugt, in denen Indikatorschicht und Aktivatorschicht aufeinander kaschiert werden sollen. In diesen Fällen kann die Verzögerungsschicht nämlich neben der Erzielung der gewünschten Verzögerungswirkung auch als Trägermaterial für die (Indikator- oder Aktivator-)Schicht dienen, die sich näher an dem Kühlgut befindet.

Wie bereits erwähnt ist es bei der Wahl einer geeigneten Verzögerungsschicht vorteilhaft auch die Feuchtigkeitsdurchlässigkeit der weiteren Schichten der Vorrichtung bis einschließlich der äußersten farbgebenden Schicht (d.h. Indikator- oder Aktivatorschicht) sowie der darunter liegenden Produktverpackung zu berücksichtigen: Falls eine der anderen Schichten und/oder die Produktverpackung eine geringe Feuchtigkeitsdurchlässigkeit aufweist, so sollte die Feuchtigkeitsdurchlässigkeit der Verzögerungsschicht möglichst hoch liegen (oder die Verzögerungsschicht wird ganz weggelassen falls maximale Durchlässigkeit gefordert wird, siehe unten). Ist die Feuchtigkeitsdurchlässigkeit der anderen Schichten und der Produktverpackung hingegen hoch, so sollte eine Verzögerungsschicht eingesetzt werden, die eher im unteren Bereich des oben angegebenen Intervalls liegt um so die gewünschte Zeitdauer bis zum Farbumschlag einzustellen.

Eine weitere Ausgestaltung der vorliegenden Erfindung liegt darin, ausschließlich die Verpackung des Kühlguts (oder eine Schicht derselben) als Verzögerungsschicht einzusetzen, also die Verzögerungsschicht als Bestandteil der erfindungsgemäßen Vorrichtung wegzulassen. Diese Ausführungsform eignet sich insbesondere für die Anwendung mit Produktverpackungen, die bereits eine ausreichend hohe Verzögerungswirkung aufweisen und/oder bei Vorrichtungen, bei denen die weiteren vorliegenden Schichten (wie z.B. Haft- und/oder Trennschichten) in Kombination mit der Produktverpackung eine ausreichend hohe Verzögerung aufweisen. Hier gelten natürlich dieselben Anforderungen an die Produktverpackung, d.h. das Verpackungsmaterial (bzw. dessen Bestandteil) muss in der Lage sein, Feuchtigkeit aufzunehmen und mit geeigneter Verzögerung wieder abzugeben. Verpackungen aus Karton sind hierfür gut geeignet. Sofern jedoch die Verpackung mit einem für Feuchtigkeit undurchlässigen Material beschichtet wird, muss gewährleistet werden, dass dieses feuchtigkeitsundurchlässige Material in dem Bereich, in dem die erfindungsgemäße Vorrichtung aufgebracht wird, nicht vorliegt oder zumindest mit Poren versehen wird. Alternativ hierzu kann besagtes feuchtigkeitsundurchlässiges Material erst nach Aufbringen der erfindungsgemäßen Vorrichtung aufgetragen werden, so dass der Feuchtigkeitstransport durch die Verpackung zur erfindungsgemäßen Vorrichtung unterhalb der feuchtigkeitsundurchlässigen Schicht erfolgt und durch diese nicht behindert wird.

### 5.11. Untere Haftschicht

Für die untere Haftschicht gelten die Angaben zur mittleren Haftschicht unter Punkt 5.7 analog. Auch hier ist durch geeignete Maßnahmen (d.h. Wahl eines geeigneten Klebstoffes und/oder Vorsehen von Aussparungen) auf ausreichenden Feuchtigkeitstransport zu achten.

### 5.12. Schutzschicht

In den Fällen, in denen die erfindungsgemäße Vorrichtung nicht direkt auf der Produktverpackung aufgebracht wird (sondern beispielsweise separat in Form eines Etiketts hergestellt wird), empfiehlt es sich die Vorrichtung auf der der Deckschicht gegenüberliegenden Seite eine Schutzschicht vorzusehen. Diese Schutzschicht hat die Aufgabe, die erfindungsgemäße Vorrichtung vor dem Eindringen von Feuchtigkeit von der betreffenden Seite zu schützen um so die Lagerstabilität der Vorrichtung zu erhöhen.

Besagte Schutzschicht kann auch die Handhabbarkeit der erfindungsgemäßen Vorrichtung verbessern. So ist es beispielsweise möglich, die erfindungsgemäße Vorrichtung in Bahnen herzustellen, wobei die Breite der Bahn typischerweise im Bereich von 50 cm bis 250 cm, bevorzugt 80 cm bis 150 cm, liegt. Ihre Länge ist nicht festgelegt und kann bis zu mehreren Kilometern betragen. Vor dem Aufbringen auf die Produktverpackung werden dann einzelne Etiketten in der gewünschten Größe aus besagten Bahnen herausgetrennt, z.B. durch Stanzen. Derartige Bahnen werden für Lagerung und Transport vorzugsweise aufgerollt. Das Aufbringen einer Schutzschicht kann das Aufrollen und insbesondere das spätere Abrollen derartiger Bahnen erleichtern, besonders wenn eine nach Außen weisende Haftschicht vorgesehen ist.

Die Schutzschicht sollte für Feuchtigkeit möglichst undurchlässig sein. Das einzusetzende Material ist der gewünschten Lagerdauer sowie den zu erwartenden Lagerungsbedingungen anzupassen. Es bieten sich insbesondere Folien mit geringer Durchlässigkeit für Feuchtigkeit an, wie z.B. die oben zur Deckschicht beschriebenen Folien. Denkbar ist aber auch die Verwendung anderer Materialien wie Schutzlacke, oder beschichtetes Papier.

Besagte Schutzschicht sollte sich leicht von der erfindungsgemäßen Vorrichtung ablösen lassen. Wenn die erfindungsgemäße Vorrichtung eine nach Außen weisenden Haftschicht aufweist, kann die gewünschte Ablösbarkeit durch Verwendung eines geeigneten Silikonmaterials gewährleistet werden. Das Silikonmaterial kann beispielsweise auf die als Kontaktfläche zur Haftschicht vorgesehene Oberfläche der Schutzschicht aufgebracht werden.

### 5.13. Einstellung der Zeitdauer bis zum Farbumschlag

Die gewünschte Zeitdauer zwischen Beginn des Auftauprozesses und Farbumschlag der erfindungsgemäßen Vorrichtung (nachfolgend: "Umschlagszeitdauer") liegt im Bereich von wenigen Minuten bis mehreren Stunden, insbesondere von 10 min bis 5 h, bevorzugt von 30 min bis 4 h, noch stärker bevorzugt von 1 h bis 3 h und insbesondere etwa 2 h.

Abhängig von der Art der Produktgruppe kann es sinnvoll sein erfindungsgemäße Vorrichtungen mit schneller Farbumschlagsgeschwindigkeit, mittlerer Farbumschlagsgeschwindigkeit oder langsamer Farbumschlagsgeschwindigkeit zu entwickeln. So sollte eine Vorrichtung mit schnellem Farbumschlag sich erst nach ca. 60 Minuten verfärben (z.B. im Bereich von 60 und 100 Minuten). Eine Vorrichtung mit mittlerer Farbumschlagsgeschwindigkeit sollte sich erst nach ca. 90 Minuten verfärben (z.B. im Bereich von 90 bis 140 Minuten). Eine Vorrichtung mit langsamem Farbumschlag sollte sich erst nach ca. 140 Minuten verfärben (z.B. im Bereich von 140 bis 200 Minuten). Diese Angaben von Umschlagszeitdauern beziehen sich jeweils auf die Standardtestbedingungen gemäß Abschnitt 5.1 oben.

Durch den nachfolgenden iterativen Prozess kann die Zeitdauer zwischen Beginn des Auftauprozesses und Farbumschlag der erfindungsgemäßen Vorrichtung auf den gewünschten Wert eingestellt werden:
1. In einem ersten Schritt wird eine Basis-Vorrichtung gemäß der vorliegenden Beschreibung hergestellt. Es bietet sich an, eine der Vorrichtungen gemäß der nachfolgend beschriebenen Ausführungsbeispiele herzustellen.
2. Anschließend wird die Basis-Vorrichtung auf der Produktverpackung des interessierenden Kühlguts aufgebracht. Es wird die Umschlagszeitdauer beim beginnenden Auftauen bestimmt.
3. Falls die bestimmte Umschlagszeitdauer länger ist als der vorgegebene Zielwert wird nachfolgender Schritt 4 durchgeführt; falls die bestimmte Umschlagszeitdauer kürzer ist als der vorgegebene Zielwert wird nachfolgender Schritt 5 durchgeführt; andernfalls besteht kein weiterer Anpassungsbedarf, das Verfahren wird mit Schritt 8 beendet.
4. Die aktuelle Vorrichtung (im ersten Durchgang: Basis-Vorrichtung) wird in modifizierter Form nachgearbeitet, so dass die gesamte Verzögerungswirkung aller relevanten Schichten der Vorrichtung beim Transport von Feuchtigkeit verringert wird. Dies erfolgt durch Verwendung eines oder mehrerer Materialien mit besserer Eignung zum Transport von Feuchtigkeit in zumindest einer relevanten Schicht, und/oder die Schichtdicke von zumindest einer relevanten Schicht wird verringert. Die so erhaltene Vorrichtung wird gemäß nachfolgendem Schritt 6 getestet.
5. Die aktuelle Vorrichtung (im ersten Durchgang: Basis-Vorrichtung) wird in modifizierter Form nachgearbeitet, so dass die gesamte Verzögerungswirkung aller relevanten Schichten der Vorrichtung beim Transport von Feuchtigkeit erhöht wird. Dies erfolgt durch Verwendung eines oder mehrerer Materialien mit schlechterer Eignung zum Transport von Feuchtigkeit in zumindest einer relevanten Schicht, und/oder die Schichtdicke von zumindest einer relevanten Schicht wird erhöht. Die so erhaltene Vorrichtung wird gemäß nachfolgendem Schritt 6 getestet.
6. Anschließend wird die modifizierte Vorrichtung auf der Produktverpackung des interessierenden Kühlguts aufgebracht. Es wird die Umschlagszeitdauer beim beginnenden Auftauen bestimmt.
7. Falls die bestimmte Umschlagszeitdauer länger ist als der vorgegebene Zielwert wird vorstehender Schritt 4 durchgeführt; falls die bestimmte Umschlagszeitdauer kürzer ist als der vorgegebene Zielwert wird vorstehender Schritt 5 durchgeführt; andernfalls wird das Verfahren mit Schritt 8 beendet.
8. Die zuletzt getestete Vorrichtung erfüllt die Vorgabe; es besteht kein weiterer Modifizierungsbedarf.

Gemäß einer bevorzugten Ausführungsform wird die Verzögerungswirkung einer oder mehrerer Schichten durch Verwendung von Polyethylenglykol als Matrixmaterial (z.B. in der Indikatorschicht, Trennschicht und/oder Aktivatorschicht) angepasst. Hierbei kann insbesondere durch Veränderung der Kettenlänge (d.h. Molmasse) des Polyethylenglykols und/oder des Mischungsverhältnisses von PEG-Molekülen verschiedener Molmassen die Verzögerungswirkung wie gewünscht eingestellt werden. Geeignete Molmassen liegen im Bereich von 600 bis 4000 g/mol, bevorzugt im Bereich von 800 bis 1500 g/mol. Bei Einsatz von Mischungen können auch flüssige Polyethylenglykole mit einer Molmasse von unter 600 g/mol zum Einsatz kommen.

Analog kann auch durch Anpassung des Molekulargewichts anderer polymerer Matrixbestandteile wie Polyvinylalkohol die Verzögerungswirkung angepasst werden.

### 5.14. Herstellung

Die erfindungsgemäße Vorrichtung kann durch alle Verfahren hergestellt werden, bei denen die betreffenden Schichten gebildet bzw. bereitgestellt werden und mit den jeweils angrenzenden Schichten in Kontakt gebracht werden können. Hierbei ist weder die Reihenfolge der einzelnen Verfahrensschritte (Bereitstellung bzw. Bildung der jeweiligen Schicht, sowie Inkontaktbringen mit der bzw. den Nachbarschichten) vorgegeben, noch die für die Bildung von Schichten eingesetzten Techniken. Als vorteilhaft haben sich jedoch die folgenden Vorgehensweisen erwiesen.

### Variante (I):

(A-1) Bereitstellen der Deckschicht (a),
(A-2) Beschichten der Deckschicht (a) mit der Indikatorschicht (b),
(A-3) ggf. Trocknen der Indikatorschicht (b), zur Herstellung einer Anordnung (A)
(B-1) Bereitstellen einer Verzögerungsschicht (d),
(B-2) Beschichten der Verzögerungsschicht (d) mit der Aktivatorschicht (c),
(B-3) ggf. Trocknen der Aktivatorschicht (c) zur Herstellung einer Anordnung (B);
(C) Kaschieren der Anordnungen (A) und (B).

Die zeitliche Reihenfolge der Ausführung der Schritte (A-1) bis (A-3) im Verhältnis zu den Schritten (B-1) bis (B-3) ist nicht näher festgelegt.

Gegebenenfalls vorhandene zusätzliche Schichten wie Trenn- oder Haftschichten werden durch Ausführung der folgenden zusätzlichen Schritte an geeigneter Stelle eingeführt:
(X-1) Beschichten der bereits gebildeten bzw. bereitgestellten Nachbarschicht mit dem geeigneten Material zur Bildung der zusätzlich aufzutragenden Schicht;
(X-2) ggf. Trocknen der zusätzlich aufgebrachten Schicht.

Soll beispielsweise eine weitere Haftschicht zwischen Deckschicht und Indikatorschicht eingeführt werden, so werden oben genannte Schritte (X-1) und (X-2) zwischen den Schritten (A-1) und (A-2) durchgeführt. Soll hingegen eine Haftschicht unter der Verzögerungsschicht (d) vorgesehen werden, so können die betreffenden Schritte (X-1) und (X-2) vor Schritt (B-1) oder zu einem beliebigen späteren Zeitpunkt durchgeführt werden.

### Variante (II):

Hierbei werden alle Schichten sequentiell (d.h. nach Bereitstellen oder Aufbringen und Trocknen der jeweils vorhergehenden Schicht) aufgebracht. Um eine vorzeitige Farbreaktion an der Grenzfläche zwischen Indikatorschicht und Aktivatorschicht zu vermeiden, wird bei dieser Variante eine Trennschicht zwischen diesen beiden Schichten vorgesehen.

Die Reihenfolge des Aufbringens der einzelnen Schichten ist durch die gewünschte Reihenfolge der Schichten in der herzustellenden Vorrichtung festgelegt. Es ist jedoch möglich, die Reihenfolge der Aufbringung der einzelnen Schichten umzukehren, d.h. es kann als erster Schritt die Deckschicht (a) bereitgestellt werden oder die Verzögerungsschicht (d). Somit ergeben sich die folgenden Vorgehensweisen für eine beispielhafte Schichtreihenfolge:
(D-1) Bereitstellen der Deckschicht (a),
(D-2) Beschichten der Deckschicht (a) mit der Indikatorschicht (b),
(D-3) ggf. Trocknen der Indikatorschicht (b),
(D-4) Beschichten der Indikatorschicht (b) mit der Trennschicht (t),
(D-5) ggf. Trocknen der Trennschicht (t)
(D-6) Beschichten der Trennschicht (t) mit der Aktivatorschicht (c),
(D-7) ggf. Trocknen der Aktivatorschicht (c)
(D-8) Beschichten der Aktivatorschicht (c) mit der Verzögerungsschicht (d),
(D-9) ggf. Trocknen der Verzögerungsschicht (d);
sowie
(D'-1) Bereitstellen der Verzögerungsschicht (d),
(D'-2) Beschichten der Verzögerungsschicht (d) mit der Aktivatorschicht (c),
(D'-3) ggf. Trocknen der Aktivatorschicht (c),
(D'-4) Beschichten der Aktivatorschicht (c) mit der Trennschicht (t),
(D'-5) ggf. Trocknen der Trennschicht (t)
(D'-6) Beschichten der Trennschicht (t) mit der Indikatorschicht (b),
(D'-7) ggf. Trocknen der Indikatorschicht (b)
(D'-8) Beschichten der Indikatorschicht (b) mit der Deckschicht (a),
(D'-9) ggf. Trocknen der Deckschicht (a)

Auch bei diesen Verfahrensvarianten können gegebenenfalls vorhandene zusätzliche Schichten, wie weitere Trenn- oder Haftschichten, durch Ausführung der oben beschriebenen zusätzlichen Schritte (X-1) und (X-2) an geeigneter Stelle eingeführt werden.

Bei alternativen Schichtreihenfolgen gemäß Figuren 1 bis 13 ändert sich die Reihenfolge des Auftrags der einzelnen Schichten entsprechend. So können bei diesen Verfahren natürlich auch Schichten wegfallen. Gemäß einer bevorzugten Variante der oben beschriebenen Verfahren wird keine Trennschicht aufgetragen. Schritte D-4 und D5 bzw. D'-4 und D'-5 fallen also weg. In diesem Fall ist es wesentlich, eine vorzeitige Farbreation zwischen Aktivator und Indikator während der Herstellung zu vermeiden. Dies kann durch Verwendung eines leicht flüchtigen Lösungsmittels im Druckvorgang erreicht werden. Geeignete leicht flüchtige Lösungsmittel sind insbesondere organische Lösungsmittel, die einen Dampfdruck aufweisen, der höher als der Dampfdruck von Wasser ist (jeweils bei 20°C) und/oder bei denen der Siedepunkt niedriger als bei Wasser liegt. Sie umfassen Ethanol, Aceton, Diethylether, Methanol, Isopropanol, Ethylacetat und Methylacetat sowie Mischungen derartiger Lösungsmittel. Bevorzugt ist Ethanol. Besonders bevorzugt ist die Verwendung einer Kombination dieser Lösungsmittel und insbesondere des Lösungsmittels Ethanol mit der erfindungsgemäßen Verwendung von modifizierter Cellulose als Verdickungsmittel, wobei die modifizierte Cellulose bevorzugt ausgewählt ist aus der Gruppe bestehend aus Hydroxypropylmethylcellulose (HPMC), Methylcellulose (MC), Hydroproxypropylcellulose, Carboxymethylcellulose (CMC) oder deren Mischungen. Besonders bevorzugt ist HPMC, insbesondere in Kombination mit Ethanol. Die Mengenverhältnisse zwischen dem Lösungsmittel und dem Verdickungsmittel werden dem gewählten Druckverfahren angepasst. Hierbei besteht insbesondere die Möglichkeit, die Mengenverhältnisse so zu wählen, dass die Viskosität auf das Druckverfahren abgestimmt wird und gleichzeitig eine unerwünschte vorzeitige Farbreaktion durch ausreichend hoch gewählte Viskosität so stark verlangsamt wird, dass ausreichend Zeit für die Trocknung der neu aufgetragenen Schichten vor Beginn des Ablaufs der Farbreaktion verbleibt. Dies ist insbesondere vorteilhaft, wenn ohne Trennschicht gearbeitet wird.

Der Druckvorgang wird wie oben schichtweise durchgeführt. Sehr vorteilhaft ist, dass die als zweites gedruckte für die Farbbildung relevante Schicht direkt nach dem Auftragen so schnell als möglich getrocknet wird. In den oben dargestellten Verfahren bedeutet dies, dass Schritte D6 und D7 nahezu zeitgleich und direkt nach Schritt D-3 durchgeführt werden (bzw. dass Schritte D'-6 und D'-7 nahezu zeitgleich und direkt nach Schritt D'-3 durchgeführt werden). Das sofortige Trocknen kann durch Erzeugen eines Gasstroms, bevorzugt eines Luftstroms, über die bedruckte Oberfläche erzielt werden. Das leicht flüchtige Lösungsmittel wird durch den Gasstrom abgeführt bevor es zu einer unerwünschten Wanderung des Aktivators in die Indikatorschicht kommt.

Das Aufbringen der Schichten kann durch jede Technologie, die zur Bildung dünner Schichten geeignet ist, erfolgen. Als besonders geeignet haben sich Druckmaschinen herausgestellt, die in der Lage sind, mehrere Materialschichten nacheinander aufzutragen und jeweils direkt nach dem Auftrag zu trocknen. Geeignet sind beispielsweise Druckmaschinen, die nach dem Offset-, Flexo- oder Siebdruckverfahren arbeiten. Gemäß einer weiteren Variante der vorliegenden Erfindung kann die Schichtherstellung gemäß Tiefdruck oder Digitaldruck erfolgen.

Tiefdruckmaschinen sind im Allgemeinen besonders gut geeignet um die für die vorliegende Erfindung wesentliche Trocknung der einzelnen Schichten durchzuführen.

Digitaldruck hat den Vorteil eines berührungsfreien Druckvorgangs. Die sich daraus ergebenden Möglichkeiten umfassen insbesondere das direkte Auftragen der Indikatorschicht, optionalen Trennschicht und/oder Aktivatorschicht auf eine bereits vorliegende Haftschicht. So ist es beispielsweise möglich eine Produktverpackung aus Karton vorab mit einer Haftschicht zu versehen und anschließend mittels Digitaldruckverfahren weitere Schichten der erfindungsgemäßen Vorrichtung (wie z.B. Indikatorschicht, optionale Trennschicht und/oder Aktivatorschicht) aufzutragen. Durch ein derartiges Vorgehen können die Herstellungskosten der Vorrichtung gesenkt werden. Natürlich kann bei diesem Vorgehen auch die Haftschicht weggelassen werden. Indikator und Aktivator können wie oben beschrieben (z.B. mit organischem Lösungsmittel und Verdickungsmittel) zubereitet werden, so dass die resultierenden Zusammensetzungen auch ohne Haftschicht auf beliebige Oberflächen aufgedruckt werden können und dort haften. Auf komplette Trocknung nach den einzelnen Druckvorgängen ist, wie oben erläutert, zu achten. So können mit Digitaldruck sowohl Etiketten hergestellt werden, als auch die erfindungsgemäße Vorrichtung direkt auf die Produktverpackung aufgebracht werden.

Andere Verfahren zum Auftrag dünner Schichten umfassen Sprühverfahren, Rakelverfahren, Tauchverfahren, etc.

Die für jede Materialschicht aufzutragenden Zusammensetzungen werden im Hinblick auf ihre Viskosität auf die Erfordernisse des gewählten (Druck-)Verfahrens angepasst. Hierfür können geeignete Verdickungsmittel eingesetzt werden. Geeignet sind alle Verdickungsmittel, die gegenüber Indikator und Aktivator inert sind, und die den gewünschten Transport von Aktivator zu Indikator nicht behindern. Als Beispiele sind Polysaccharide wie Pektin, Xanthan, Guarkernmehl, Agar-Agar, Cellulose und CelluloseDerivate sowie Calziumacetat und Glycerin zu nennen. Die gewünschte Viskosität kann auch durch geeignete Anpassung der Konzentration der Materialien in dem gewählten Lösungsmittel erfolgen. Falls eine weitere Erhöhung der Konzentration gewünscht ist kann die Herstellung der Lösung auch bei erhöhter Temperatur erfolgen. So ist es beispielsweise möglich, eine hoch konzentrierte Lösung von Zitronensäure in Wasser durch Herstellung einer gesättigten Lösung bei ca. 50°C bis 60°C zu erhalten. Bei dieser Ausführungsform kann der Auftrag der Materialien ebenfalls bei erhöhter Temperatur erfolgen um ein vorzeitiges Festwerden bzw. Auskristallisieren einzelner Bestandteile zu verhindern.

Beim Einsatz von Sprühverfahren ist es hingegen nicht erforderlich die Viskosität der aufzusprühenden Lösung z.B. durch Zusatz von Verdickungsmitteln zu erhöhen.

Die Trocknung der einzelnen aufgetragenen Schichten (ebenso wie die trockene Lagerung der hergestellten Vorrichtung) ist wichtig um einen vorzeitigen Farbumschlag zu verhindern. Der Grad der Trocknung muss entsprechend gewählt werden, um diese Vorgabe zu erfüllen. Wie bereits in Abschnitten 5.6 und 5.9 erwähnt kann es zur Beschleunigung der Trocknung von Vorteil sein, eine oder mehrere der Schichten der erfindungsgemäßen Vorrichtung jeweils durch Aufbringen einer Mehrzahl dünner Schichten gleicher Zusammensetzung zu bilden, wobei die jeweils zuletzt aufgebrachte Schicht vor dem Aufbringen der nächsten Schicht getrocknet wird. Wie oben erwähnt kann die Trocknung durch einen Gasstrom, bevorzugt Luftstrom, beschleunigt werden.

Weiterhin ist ein Erhitzen für die Trocknung vorteilhaft. Geeignet sind beispielsweise Erhitzungstemperaturen in Bereich 40-150°C und bevorzugt 50-140°C. Bei der Wahl der geeigneten Erhitzungstemperatur ist darauf zu achten, dass die eingesetzten Materialien der thermischen Belastung widerstehen können und dass insbesondere kein vorzeitiger Farbumschlag auftritt. Bei Herstellung der erfindungsgemäßen Vorrichtung im industriellen Maßstab, z.B. bei Verwendung von Druckverfahren mit einer Bahngeschwindigkeit im Bereich von 50 bis 300 m/min sind Temperaturen im Bereich von 60-120°C und insbesondere 70-100°C bevorzugt.

Eine weitere bevorzugte Maßnahme zur Unterstützung des Trocknens ist das Anlegen eines Unterdrucks. Dies kann beispielsweise durch ein Absaugen von Luft aus der Druckmaschine erfolgen. Dem anzulegenden Unterdruck sind im Hinblick auf die vorliegende Erfindung keine Grenzen gesetzt. Der anzulegende Unterdruck wird somit durch die apparativen Möglichkeiten sowie Kosten- und Effizienzerwägungen bestimmt. Der Fachmann kann den bestmöglichen Kompromiss zwischen Aufwand und Trocknungseffizienz durch routinemäßige Optimierung ermitteln.

Sofern dies gewünscht ist, können einzelne Trocknungsschritte abgekürzt oder komplett vermieden werden, solange gewährleistet ist, dass in dem Moment, in dem Aktivatorschicht und Indikatorschicht in Kontakt gebracht werden (ggf. über eine Haft- oder Trennschicht), der Trocknungsgrad ausreichend hoch ist um einen Farbumschlag zu verhindern. Natürlich ist eine Trocknung nicht erforderlich wenn eine (ausreichend trockene) vorgefertigte Folie bzw. Schicht auf die bereits existierende(n) Schicht bzw. Schichten aufgebracht wird.

Als Alternative zu den oben beschriebenen Methoden zur Bildung der einzelnen Schichten unter Verwendung flüssiger Zusammensetzungen mit anschließender Trocknung ist es auch möglich eine oder mehrere der Schichten durch Auftragen trockener Pulver zu bilden. Diese Vorgehensweise bietet sich insbesondere für das Auftragen von Indikator und/oder Aktivator an. Beim Auftragen trockener Pulver entfällt natürlich der sonst obligatorische Trocknungsschritt.

So ist es möglich Pulverpartikel auf eine vorgelegte Matrix- bzw. Haftschicht aufzubringen und dort zu fixieren.

Dies kann beispielsweise in Form eines Aerosols der Partikel in Luft oder einem anderen Trägergas erfolgen. Eine Möglichkeit des Auftrags besteht darin, die vorgelegten Partikel mittels Druckluft direkt auf eine vorgelegte Schicht aus Matrixmaterial, vorzugsweise einen Klebstoff, aufzusprühen.

Das Auftragen trockener Pulver kann durch statische Aufladung erleichtert werden. Dies kann beispielsweise geschehen durch Aufnahme und Anhaften der aufzutragenden Partikel (z.B. Indikatorpartikel und/oder Aktivatorpartikel) an einer Druckwalze durch gegensätzliche elektrostatische Aufladung der Partikel und der Druckwalze. Die so mit Partikeln beladene Druckwalze kann anschließend besagte Partikel auf eine Schicht aus Matrixmaterial, vorzugsweise Klebstoff, abgeben (etwa wie der Farbübertrag bei einem Stempel).

Andere Verfahren zur Abscheidung aus der Gasphase (wie z.B. chemische Gasphasenabscheidung CVD) sind grundsätzlich denkbar sofern die einzusetzenden Materialien unter den erforderlichen Prozessbedingungen ausreichend stabil sind.

Bei den Ausführungsformen der vorliegenden Erfindung, bei denen die erfindungsgemäße Vorrichtung in die Verpackung des Kühlguts integriert wird (z.B. durch Einsatz des Verpackungsmaterials als Verzögerungsschicht) verläuft die Herstellung analog, wobei zweckmäßigerweise Variante (II) gewählt wird und der Schichtaufbau von der Verzögerungsschicht ausgehend erfolgt. Alternativ hierzu könnte der Schichtaufbau gemäß Variante (II) ausgehend von der Deckschicht beginnen und vor der Verzögerungsschicht enden, z.B. mit Ausbildung der Aktivatorschicht. Das so hergestellte Zwischenprodukt kann anschließend auf die Verpackung aufgebracht werden. Eine weitere Möglichkeit besteht darin, gemäß Variante (I) vorzugehen und Anordnung (A) wie oben beschrieben herzustellen. Bei der Herstellung von Anordnung (B) werden die Aktivatorschicht und gegebenenfalls weitere Schichten direkt auf die Verpackung aufgebracht. Anschließend werden Anordnungen (A) und (B) kaschiert.

Gemäß einer Ausführungsform werden die relevanten Schichten (d.h. insbesondere Indikatorschicht, ggf. Trennschicht und Aktivatorschicht) in der gewünschten Reihenfolge vollflächig und in Bahnen auf die Deckschicht aufgebracht. Anschließend wird eine wieder ablösbare Schutzschicht aufgebracht und das so erhaltene Produkt zwischengelagert. Dies erfolgt vorzugsweise in Form aufgerollter Bahnen, wie oben im Zusammenhang mit der Schutzschicht beschrieben.

Alternativ hierzu können die relevanten Schichten (d.h. insbesondere Indikatorschicht, ggf. Trennschicht und Aktivatorschicht) in der gewünschten Reihenfolge vollflächig und in Bahnen auf die Deckschicht aufgebracht, aufgerollt und in Form aufgerollter Bahnen zwischengelagert werden.

Aus diesen Bahnen lassen sich dann einzelne Etiketten ausstanzen und auf die Produktverpackung aufbringen.

Gemäß einer weiteren Ausführungsform werden die relevanten Schichten (d.h. insbesondere Indikatorschicht, ggf. Trennschicht und Aktivatorschicht) in der gewünschten Reihenfolge auf eine Trägerfolie (die entweder als ablösbare Schutzschicht oder als feuchtigkeitsdurchlässige Trennschicht fungiert) aufgetragen. Dies kann ebenfalls vollflächig in Bahnen erfolgen. Aus dem so erhaltenen Zwischenprodukt lassen sich einzelne Etiketten-Zwischenprodukte ausstanzen. Die so erhaltenen Etiketten-Zwischenprodukte können dann auf die Deckschicht aufgebracht werden, z.B. durch Kaschieren. Vorzugsweise ist die Deckschicht mit einer Haftschicht versehen. Vorzugsweise ist die Deckschicht größer als das Etiketten-Zwischenprodukt. Auf diese Weise kann erzielt werden, dass in dem fertigen Etikett rund um den Bereich des Etiketten-Zwischenprodukts ein mit Haftschicht versehener überstehender Bereich vorliegt, der das Aufkleben des Etiketts auf die Produktverpackung erleichtert.

### 5.15. Anwendungen

Die erfindungsgemäße Vorrichtung eignet sich zur Überwachung der thermischen Vorgeschichte beliebiger Produkte, die permanent gekühlt werden müssen. Hierbei kommen in erster Linie tiefgekühlte Lebensmittel in Betracht. Weiterhin eignet sich die erfindungsgemäße Vorrichtung jedoch auch für die Anwendung im Zusammenhang mit anderen Produkten die dauerhaft gekühlt oder tiefgekühlt werden müssen. Das zu kühlende Produkt sollte jedoch Feuchtigkeit enthalten um ein einwandfreies Funktionieren der erfindungsgemäßen Vorrichtung zu gewährleisten.

Die praktische Anwendung erfolgt sinnvollerweise durch Aufbringen der erfindungsgemäßen Vorrichtung auf die äußere Verpackung des zu kühlenden Produkts. So kann eine leichte Erkennbarkeit des Farbumschlags gewährleistet werden. Hierbei ist natürlich darauf zu achten, dass Feuchtigkeit aus dem Inneren der Verpackung zu der erfindungsgemäßen Vorrichtung gelangen kann, sobald die Kühlkette unterbrochen ist.

Ein wesentlicher Vorteil der vorliegenden Erfindung liegt darin, dass eine zuverlässige Anzeige erfolgt, unabhängig davon, ob ein direkter Kontakt zwischen Kühlgut und Anzeigevorrichtung besteht. Daher kann die erfindungsgemäße Vorrichtung an jeder beliebigen Stelle der Verpackung angebracht werden. Die Größe der von der erfindungsgemäßen Vorrichtung bedeckten Fläche ist nicht näher festgelegt. Im Hinblick auf die leichte Erkennbarkeit des Farbumschlags sollte diese Fläche jedoch vorteilhafterweise 0,2 cm², bevorzugt 0,5 cm², stärker bevorzugt 0,8 cm² nicht unterschreiten.

Das Aufbringen eines Logos, weiterer Beschriftungen oder Hinweise ist im Zusammenhang mit den Anwendungen der vorliegenden Erfindung denkbar und auch zweckmäßig um den Konsumenten auf die Erfindung hinzuweisen. Logo, Beschriftung, etc. können auf der erfindungsgemäßen Vorrichtung erfolgen. Hierbei ist jedoch darauf zu achten, dass Logo, Beschriftung, etc. so angebracht werden, dass der Farbumschlag sicher erkannt werden kann. Ein komplettes Überdecken der erfindungsgemäßen Vorrichtung mit z.B. einem Logo ist zu vermeiden. Natürlich ist es im Rahmen der vorliegenden Erfindung ebenso möglich, Logo, Beschriftung, etc. neben der erfindungsgemäßen Vorrichtung auf die Verpackung aufzubringen.

### 6. Bevorzugte Ausführungsformen

Es ist bevorzugt, die vorliegende Erfindung unter Verwendung der Merkmale, Bestandteile und/oder Maßnahmen, die vorstehend beispielhaft genannt und/oder als "bevorzugt" gekennzeichnet sind. Stärker bevorzugt sind die Ausführungsformen der vorliegenden Erfindung, bei denen zwei oder mehr der beispielhaft genannten und/oder als "bevorzugt" gekennzeichneten Merkmale, Bestandteile und/oder Maßnahmen miteinander kombiniert werden.

### Bevorzugt sind insbesondere:

(i) die Verwendung der beispielhaft genannten und/oder als "bevorzugt" gekennzeichneten Materialien für die Deckschicht in Vorrichtungen, die eine Schichtreihenfolge gemäß Figuren 1 bis 13 aufweisen;
(ii) die Verwendung der beispielhaft genannten und/oder als "bevorzugt" gekennzeichneten Materialien für die Indikatorschicht in Vorrichtungen, die eine Schichtreihenfolge gemäß Figuren 1 bis 13 aufweisen;
(iii) die Verwendung der beispielhaft genannten und/oder als "bevorzugt" gekennzeichneten Materialien für die Aktivatorschicht in Vorrichtungen, die eine Schichtreihenfolge gemäß Figuren 1 bis 13 aufweisen;
(iv) die Verwendung der beispielhaft genannten und/oder als "bevorzugt" gekennzeichneten Materialien für die Verzögerungsschicht in Vorrichtungen, die eine Schichtreihenfolge gemäß Figuren 1 bis 13 aufweisen;
(v) die Verwendung der beispielhaft genannten und/oder als "bevorzugt" gekennzeichneten Materialien für die Haftschichten in Vorrichtungen, die eine Schichtreihenfolge gemäß Figuren 1 bis 13 aufweisen;
(vi) die Verwendung der beispielhaft genannten und/oder als "bevorzugt" gekennzeichneten Materialien für die Trennschicht in Vorrichtungen, die eine Schichtreihenfolge gemäß Figuren 1 bis 13 aufweisen;
(vii) die Verwendung der beispielhaft genannten und/oder als "bevorzugt" gekennzeichneten Materialien für die Deckschicht in Kombination mit der Verwendung der beispielhaft genannten und/oder als "bevorzugt" gekennzeichneten Materialien für die Indikatorschicht;
(viii) die Verwendung der beispielhaft genannten und/oder als "bevorzugt" gekennzeichneten Materialien für die Deckschicht in Kombination mit der Verwendung der beispielhaft genannten und/oder als "bevorzugt" gekennzeichneten Materialien für die Aktivatorschicht;
(ix) die Verwendung der beispielhaft genannten und/oder als "bevorzugt" gekennzeichneten Materialien für die Deckschicht in Kombination mit der Verwendung der beispielhaft genannten und/oder als "bevorzugt" gekennzeichneten Materialien für die Verzögerungsschicht;
(x) die Verwendung der beispielhaft genannten und/oder als "bevorzugt" gekennzeichneten Materialien für die Deckschicht in Kombination mit der Verwendung der beispielhaft genannten und/oder als "bevorzugt" gekennzeichneten Materialien für die Haftschichten;
(xi) die Verwendung der beispielhaft genannten und/oder als "bevorzugt" gekennzeichneten Materialien für die Deckschicht in Kombination mit der Verwendung der beispielhaft genannten und/oder als "bevorzugt" gekennzeichneten Materialien für die Trennschicht:
(xii) die Verwendung der beispielhaft genannten und/oder als "bevorzugt" gekennzeichneten Materialien für die Indikatorschicht in Kombination mit der Verwendung der beispielhaft genannten und/oder als "bevorzugt" gekennzeichneten Materialien für die Aktivatorschichtm, wobei jedoch zusätzlich darauf zu achten ist, dass Indikator und Aktivator (sowie das Medium, beispielsweise in bezug auf dessen pH) aufeinander abgestimmt sein müssen;
(xiii) die Verwendung der beispielhaft genannten und/oder als "bevorzugt" gekennzeichneten Materialien für die Indikatorschicht in Kombination mit der Verwendung der beispielhaft genannten und/oder als "bevorzugt" gekennzeichneten Materialien für die Verzögerungsschicht;
(xiv) die Verwendung der beispielhaft genannten und/oder als "bevorzugt" gekennzeichneten Materialien für die Indikatorschicht in Kombination mit der Verwendung der beispielhaft genannten und/oder als "bevorzugt" gekennzeichneten Materialien für die Haftschichten;
(xv) die Verwendung der beispielhaft genannten und/oder als "bevorzugt" gekennzeichneten Materialien für die Indikatorschicht in Kombination mit der Verwendung der beispielhaft genannten und/oder als "bevorzugt" gekennzeichneten Materialien für die Trennschicht;
(xvi) die Verwendung der beispielhaft genannten und/oder als "bevorzugt" gekennzeichneten Materialien für die Aktivatorschicht in Kombination mit der Verwendung der beispielhaft genannten und/oder als "bevorzugt" gekennzeichneten Materialien für die Verzögerungsschicht;
(xvii) die Verwendung der beispielhaft genannten und/oder als "bevorzugt" gekennzeichneten Materialien für die Aktivatorschicht in Kombination mit der Verwendung der beispielhaft genannten und/oder als "bevorzugt" gekennzeichneten Materialien für die Haftschichten;
(xviii) die Verwendung der beispielhaft genannten und/oder als "bevorzugt" gekennzeichneten Materialien für die Aktivatorschicht in Kombination mit der Verwendung der beispielhaft genannten und/oder als "bevorzugt" gekennzeichneten Materialien für die Trennschicht;
(xix) die Verwendung der beispielhaft genannten und/oder als "bevorzugt" gekennzeichneten Materialien für die Verzögerungsschicht in Kombination mit der Verwendung der beispielhaft genannten und/oder als "bevorzugt" gekennzeichneten Materialien für die Haftschichten;
(xx) die Verwendung der beispielhaft genannten und/oder als "bevorzugt" gekennzeichneten Materialien für die Verzögerungsschicht in Kombination mit der Verwendung der beispielhaft genannten und/oder als "bevorzugt" gekennzeichneten Materialien für die Trennschicht; und
(xxi) die Verwendung der beispielhaft genannten und/oder als "bevorzugt" gekennzeichneten Materialien für die Haftschichten in Kombination mit der Verwendung der beispielhaft genannten und/oder als "bevorzugt" gekennzeichneten Materialien für die Trennschicht.

Stärker bevorzugt sind jene erfindungsgemäßen Vorrichtungen, bei denen die oben genannten bevorzugten Kombinationen weiter kombiniert werden, also Vorrichtungen mit den Merkmalskombinationen (i)-(ii), (i)-(iii), (i-iv), (i)-(v), (i)-(vi), (i)-(vii), (i)-(viii), (i)-(ix), (i)-(x), (i)-(xi), (i)-(xii), (i)-(xiii), (i)-(xiv), (i)-(xv), (i)-(xvi), (i)-(xvii), (i)-(xviii), (i)-(xix), (i)-(xx), (i)-(xxi), (ii)-(iii), (ii)-(iv), (ii)-(v), (ii)-(vi), (ii)-(vii), (ii)-(viii), (ii)-(ix), (ii)-(x), (ii)-(xi), (ii)-(xii), (ii)-(xiii), (ii)-(xiv), (ii)-(xv), (ii)-(xvi), (ii)-(xvii), (ii)-(xviii), (ii)-(xix), (ii)-(xx), (ii)-(xxi), (iii)-(iv), (iii)-(v), (iii)-(vi), (iii)-(vii), (iii)-(viii), (iii)-(ix), (iii)-(x), (iii)-(xi), (iii)-(xii), (iii)-(xiii), (iii)-(xiv), (iii)-(xv), (iii)-(xvi), (iii)-(xvii), (iii)-(xviii), (iii)-(xix), (iii)-(xx), (iii)-(xxi), (iv)-(v), (iv)-(vi), (iv)-(vii), (iv)-(viii), (iv)-(ix), (iv)-(x), (iv)-(xi), (iv)-(xii), (iv)-(xiii), (iv)-(xiv), (iv)-(xv), (iv)-(xvi), (iv)-(xvii), (iv)-(xviii), (iv)-(xix), (iv)-(xx), (iv)-(xxi), (v)-(vi), (v)-(vii), (v)-(viii), (v)-(ix), (v)-(x), (v)-(xi), (v)-(xii), (v)-(xiii), (v)-(xiv), (v)-(xv), (v)-(xvi), (v)-(xvii), (v)-(xviii), (v)-(xix), (v)-(xx), (v)-(xxi), (vi)-(vii), (vi)-(viii), (vi)-(ix), (vi)-(x), (vi)-(xi), (vi)-(xii), (vi)-(xiii), (vi)-(xiv), (vi)-(xv), (vi)-(xvi), (vi)-(xvii), (vi)-(xviii), (vi)-(xix), (vi)-(xx), (vi)-(xxi), (vii)-(viii), (vii)-(ix), (vii)-(x), (vii)-(xi), (vii)-(xii), (vii)-(xiii), (vii)-(xiv), (vii)-(xv), (vii)-(xvi), (vii)-(xvii), (vii)-(xvii), (vii)-(xix), (vii)-(xx), (vii)-(xxi), (viii)-(ix), (viii)-(x), (viii)-(xi), (viii)-(xii), (viii)-(xiii), (viii)-(xiv), (viii)-(xv), (viii)-(xvi), (viii)-(xvii), (viii)-(xviii), (viii)-(xix), (viii)-(xx), (viii)-(xxi), (ix)-(x), (ix)-(xi), (ix)-(xii), (ix)-(xiii), (ix)-(xiv), (ix)-(xv), (ix)-(xvi), (ix)-(xvii), (ix)-(xviii), (ix)-(xix), (ix)-(xx), (ix)-(xxi), (x)-(xi), (x)-(xii), (x)-(xiii), (x)-(xiv), (x)-(xv), (x)-(xvi), (x)-(xvii), (x)-(xviii), (x)-(xix), (x)-(xx), (x)-(xxi), (xi)-(xii), (xi)-(xiii), (xi)-(xiv), (xi)-(xv), (xi)-(xvi), (xi)-(xvii), (xi)-(xviii), (xi)-(xix), (xi)-(xx), (xi)-(xxi), (xii)-(xiii), (xii)-(xiv), (xii)-(xv), (xii)-(xvi), (xii)-(xvii), (xii)-(xviii), (xii)-(xix), (xii)-(xx), (xii)-(xxi), (xiii)-(xiv), (xiii)-(xv), (xiii)-(xvi), (xiii)-(xvii), (xiii)-(xviii), (xiii)-(xix), (xiii)-(xx), (xiii)-(xxi), (xiv)-(xv), (xiv)-(xvi), (xiv)-(xvii), (xiv)-(xviii), (xiv)-(xix), (xiv)-(xx), (xiv)-(xxi), (xv)-(xvi), (xv)-(xvii), (xv)-(xviii), (xv)-(xix), (xv)-(xx), (xv)-(xxi), (xvi)-(xvii), (xvi)-(xviii), (xvi)-(xix), (xvi)-(xx), (xvi)-(xxi), (xvii)-(xviii), (xvii)-(xix), (xvii)-(xx), (xvii)-(xxi), (xviii)-(xix), (xviii)-(xx), (xviii)-(xxi), (xix)-(xx), (xix)-(xxi) und (xx)-(xxi). Noch stärker bevorzugt sind Kombinationen dieser vorstehend aufgelisteten Kombinationen.

Hinsichtlich der erfindungsgemäßen Herstellungsverfahren sind insbesondere die in Abschnitt 5.13 oben genannten Verfahren bevorzugt, welche zu den bevorzugten erfindungsgemäßen Vorrichtungen führen. Bevorzugt sind auch Verfahren unter Einsatz von Druckmaschinen, insbesondere wenn sie zu den bevorzugten erfindungsgemäßen Vorrichtungen führen. Beispielsweise sind im Hinblick auf industrielle Herstellung der erfindungsgemäßen Vorrichtungen die folgenden Ausführungsformen besonders bevorzugt:
Eine bevorzugte Variante weist die folgende Schichtenfolge auf:
Deckschicht - ggf. Haftschicht - Indikatorschicht - Aktivatorschicht.

Diese Schichten sind ggf. über die Haftschicht auf der als Verzögerungsschicht dienenden Produktverpackung aufgebracht (mit der Haftschicht vorzugsweise seitlich von Indikator- und Aktivatorschicht). Eine ähnliche Schichtenfolge ist in Figur 5a dargestellt, jedoch zusätzlich noch mit Trennschicht. Gemäß der hier beschriebenen bevorzugten Variante wird die Trennschicht durch geeignete Herstellungsverfahren vermieden. Eine derartige geeignete Herstellung kann unter Einsatz eines industriellen Druckverfahrens (z.B. Flexodruck) erfolgen. Hierbei wird zunächst die Deckschicht mit der Indikatorschicht bedruckt, gefolgt von einem weiteren Bedrucken mit der Aktivatorschicht. Um einen vorzeitigen Farbumschlag zu vermeiden müssen in diesem Fall geeignete Maßnahmen getroffen werden damit die Aktivatorschicht direkt nach dem Auftragen so schnell trocknet, dass keine signifikante Migration in die Aktivatorschicht erfolgt. Wie oben beschrieben kann dies durch Einsatz eines leicht flüchtigen Lösungsmittels erfolgen. Die so erhaltene Vorrichtung kann, z.B. auf Silikonpapier, gelagert werden. Sie wird in einem (ggf. auch räumlich und/oder zeitlich) getrennten Verfahrensschritt auf die Produktverpackung aufgeklebt. Hierbei wird vorzugsweise ein Anthocyanidin-Farbstoff als Indikator und Zitronensäure, Milch- oder Weinsäure als Aktivator eingesetzt. Ganz besonders bevorzugt ist die oben genannte Ausführungsform bei Verwendung eines Cyanidin-Farbstoffes als Indikator in Verbindung mit Zitronensäure als Aktivator. In einer Variante dieser Ausführungsform wird die erfindungsgemäße Vorrichtung in Form eines Etiketts hergestellt. Insbesondere ist es vorteilhaft, derartige Etiketten mit einer Schutzschicht zu versehen und in aufgerollter Form zwischenzulagern. Gemäß einer weiteren Variante wird die erfindungsgemäße Vorrichtung mit der obigen Schichtreihenfolge direkt auf die Produktverpackung aufgebracht. Die o.g. Haftschicht kann das Anhaften der Vorrichtung auf der Produktverpackung verbessern wenn sie seitlich über die Indikatorschicht und Aktivatorschicht hinausragt. Bei Verwendung eines Schutzlacks als Deckschicht kann auf die Haftschicht verzichtet werden. Ebenso kann das gewünschte Haften der erfindungsgemäßen Vorrichtung auf der Produktverpackung durch Vorsehen einer Haftschicht auf der Produktverpackung gewährleistet werden.
Bei der oben genannten bevorzugten Ausführungsform ist es gemäß einer Abwandlung denkbar, die Reihenfolge von Indikatorschicht und Aktivatorschicht zu vertauschen.

Eine weitere bevorzugte Variante weist die folgende Schichtenfolge auf:
Deckschicht - ggf. Haftschicht - Indikatorschicht - Trennschicht - Aktivatorschicht.

Diese Schichten sind ggf. über die Haftschicht auf der als Verzögerungsschicht dienenden Produktverpackung aufgebracht (mit der Haftschicht vorzugsweise seitlich von Indikator- und Aktivatorschicht). Eine derartige Schichtenfolge ist in Figur 5a dargestellt. Bei dieser Variante ist es besonders bevorzugt, ein als Trennschicht dienendes Papier auf der einen Seite mit Indikatorschicht und auf der anderen Seite mit Aktivatorschicht zu bedrucken. Das so erhaltene Zwischenprodukt kann im geeigneten Format ausgestanzt und auf eine mit einer Haftschicht versehenen Deckschicht aufgeklebt werden. Die so erhaltene Vorrichtung kann, z.B. auf Silikonpapier, gelagert werden. Sie wird in einem (ggf. auch räumlich und/oder zeitlich) getrennten Verfahrensschritt auf die Produktverpackung aufgeklebt. Auch hierbei wird vorzugsweise ein Anthocyanidin-Farbstoff als Indikator und Zitronensäure, Milch- oder Weinsäure als Aktivator eingesetzt. Ganz besonders bevorzugt ist die oben genannte Ausführungsform bei Verwendung eines Cyanidin-Farbstoffes als Indikator in Verbindung mit Zitronensäure als Aktivator. Auch bei dieser Ausführungsform wird gemäß einer Variante die erfindungsgemäße Vorrichtung in Form eines Etiketts hergestellt. Insbesondere ist es vorteilhaft, derartige Etiketten mit einer Schutzschicht zu versehen und in aufgerollter Form zwischenzulagern. Gemäß einer weiteren Variante dieser Ausführungsform wird die erfindungsgemäße Vorrichtung mit der obigen Schichtreihenfolge direkt auf die Produktverpackung aufgebracht. Die o.g. Haftschicht kann das Anhaften der Vorrichtung auf der Produktverpackung verbessern wenn sie seitlich über die Indikatorschicht, Trennschicht und Aktivatorschicht hinausragt. Bei Verwendung eines Schutzlacks als Deckschicht kann auf die Haftschicht verzichtet werden. Ebenso kann das gewünschte Haften der erfindungsgemäßen Vorrichtung auf der Produktverpackung durch Vorsehen einer Haftschicht auf der Produktverpackung gewährleistet werden.

Erneut ist auch bei dieser bevorzugten Ausführungsform ist die Variante denkbar, bei der Indikatorschicht und Aktivatorschicht vertauscht sind.

Die bevorzugten erfindungsgemäßen Verwendungen und Anwendungen der vorliegenden Erfindung sind insbesondere die in Abschnitt 5.14 oben genannten Verwendungen und Anwendungen, welche den Einsatz der bevorzugten erfindungsgemäßen Vorrichtungen beinhalten.

### 7. Beispiele

### Beispiel 1

Es wird eine erfindungsgemäße Vorrichtung gemäß Herstellungsvariante I mit einem Flexodruckverfahren hergestellt. Der Schichtaufbau entspricht der in Figur 9c dargestellten Schichtfolge.

Die Deckschicht wird aus einer PP-Folie "PP Clear TC50 P" der Fa. UPM Raflatac® gebildet. Diese PP-Folie ist bereits ab Werk mit einer Haftschicht versehen. Die Haftschicht auf Acrylatbasis "SP38" stammt somit ebenfalls UPM Raflatac®.

Die Aktivatorschicht wird auf dem Kleber aus Zitronensäure in einer Celluslosematrix gebildet. Die Auftragsstärke liegt bei 6 g/m². Die Schicht wird in dem Druckverfahren in Form einer wässrigen Dispersion mit einem Gehalt an Cellulose von ca. 5 Gew.% und einem Gehalt an Zitronensäure von ca. 1 Gew.% aufgetragen und direkt anschließend getrocknet.

Als Indikator wird Cyanidin in einer Cellulosematrix eingesetzt, Die Indikatorschicht wird auf Seidenpapier einer Stärke von 25 g/m² als Verzögerungsschicht aufgebracht. Die Auftragsstärke liegt bei 6 g/m². Auch in diesem Fall wird die Schicht in Form einer wäßrigen Dispersion aufgetragen, bei der der Gehalt an Cellulose bei 5 Gew.% und der Gehalt an Cyanidin bei 1 Gew.% liegt. Die Schicht wird sofort nach dem Aufbringen getrocknet.

Anschließend werden Aktivatorschicht und Indikatorschicht aufeinander kaschiert.

Ein Farbumschlag ist zwischen erstem Auftauen des Kühlguts (300g tiefgefrorene Erbsen Temperaturerhöhung von -18°C auf 20°C) nach 150 Minuten zu erkennen.

### Beispiel 2

Es wird eine erfindungsgemäße Vorrichtung analog Beispiel 1 hergestellt, mit dem Unterschied, dass Zeitungspapier einer Stärke von 50 g/m² eingesetzt wird.

Bei diesem Beispiel wurde unter identischen Testbedingungen ein Farbumschlag nach 200 Minuten beobachtet.

## Patentansprüche

1. Vorrichtung zur Anzeige der Vorgeschichte eines Produkts, die folgende Schichten umfasst:
(a) eine für Feuchtigkeit undurchlässige Deckschicht (1),
(b) eine Indikatorschicht (2), die mindestens einen Indikator umfasst,
(c) eine Aktivatorschicht (3), die mindestens einen Aktivator umfasst, sowie
(d) eine optionale Verzögerungsschicht (4),
wobei die Deckschicht über der Indikatorschicht, der Aktivatorschicht und der Verzögerungsschicht angeordnet ist,
wobei die Indikatorschicht zwischen Deckschicht und optionaler Verzögerungsschicht angeordnet ist, und
wobei die Aktivatorschicht abwesend sein kann sofern ein Indikator eingesetzt wird, der durch H₂O aktiviert wird,
**dadurch gekennzeichnet, dass** zumindest eine der Schichten ein Cellulosederivat ausgewählt aus Hydroxypropylmethylcellulose (HPMC), Methylcellulose (MC), Hydroproxypropylcellulose (HPC), Carboxymethylcellulose (CMC) und deren Mischungen umfasst, bevorzugt HPMC.

2. Vorrichtung gemäß Anspruch 1, worin die Indikatorschicht einen pH-Indikator, bevorzugt einen Anthocyan Farbstoff, umfasst und die Aktivatorschicht eine Säure oder Base als Aktivator aufweist.

3. Vorrichtung gemäß einem oder mehreren der Ansprüche 1 bis 2, wobei die Indikatorschicht und/oder die Aktivatorschicht zumindest ein hygroskopisches Salz enthält, welches vorzugsweise ausgewählt ist aus der Gruppe bestehend aus Magnesiumchlorid, Kaliumchlorid und Calciumchlorid.

4. Vorrichtung gemäß mindestens einem der Ansprüche 1 bis 3, wobei die Aktivatorschicht (d) aus 2-30, bevorzugt 3-8, stärker bevorzugt 4-6 sequentiellen Einzelschichten gebildet ist und/oder wobei die Indikatorschicht (c) aus 2-40, bevorzugt 4-10, stärker bevorzugt 6-8 sequentiellen Einzelschichten gebildet ist.

5. Vorrichtung gemäß mindestens einem der Ansprüche 1 bis 4, wobei die Schichten (a), (b), (c) und (d) wie folgt:
(a) Deckschicht (1),
(b) Indikatorschicht (2),
(d) optionale Verzögerungsschicht (4), und
(c) Aktivatorschicht (3),
oder
(a) Deckschicht (1),
(c) Aktivatorschicht (3),
(b) Indikatorschicht (2), und
(d) optionale Verzögerungsschicht (4),
oder
(a) Deckschicht (1),
(b) Indikatorschicht (2),
(c) Aktivatorschicht (3), und
(d) optionale Verzögerungsschicht (4),
angeordnet sind.

6. Vorrichtung gemäß mindestens einem der Ansprüche 1-5, die auf eine Produktverpackung aufgebracht ist.

7. Geschützte Vorrichtung, umfassend eine Vorrichtung gemäß mindestens einem der Ansprüche 1-5 sowie eine Schutzschicht, wobei die Schutzschicht auf der der Deckschicht gegenüber liegenden äußersten Schicht der Vorrichtung gemäß mindestens einem der Ansprüche 1-5 aufgebracht ist.

8. Vorrichtung gemäß mindestens einem der Ansprüche 1-5 oder geschützte Vorrichtung gemäß Anspruch 7,
wobei die Vorrichtung oder geschützte Vorrichtung in Form einer aufgerollten Bahn vorliegt.

9. Verfahren zur Herstellung einer Vorrichtung gemäß mindestens einem der Ansprüche 1 bis 8, bei dem eine oder mehrere der in der Vorrichtung vorhandenen Schichten durch ein- oder mehrmaliges sequenzielles Ausführen der Arbeitsschritte (i) und (ii):
(i) Drucken und
(ii) Trocknen der gedruckten Schicht
gebildet wird.

10. Verfahren zur Herstellung einer Vorrichtung gemäß mindestens einem der Ansprüche 1 bis 8, welches folgende Schritte umfasst:
(A-1) Bereitstellen der Deckschicht (1),
(A-2) Beschichten der Deckschicht (1) mit der Indikatorschicht (2),
(A-3) Trocknen der Indikatorschicht (2),
zur Herstellung einer Anordnung (A)
(B-1) Bereitstellen einer Verzögerungsschicht (4),
(B-2) Beschichten der Verzögerungsschicht (4) mit der Aktivatorschicht (3),
(B-3) Trocknen der Aktivatorschicht (3) zur Herstellung einer Anordnung (B);
(C) Kaschieren der Anordnungen (A) und (B).

11. Verfahren zur Herstellung einer Vorrichtung gemäß mindestens einem der Ansprüche 1 bis 8,
welches folgende Schritte umfasst:
(A'-1) Bereitstellen der Deckschicht (1),
(A'-2) Beschichten der Deckschicht (a) mit der Aktivatorschicht (3),
(A'-3) Trocknen der Aktivatorschicht (3),
zur Herstellung einer Anordnung (A')
(B'-1) Bereitstellen einer Verzögerungsschicht (d),
(B'-2) Beschichten der Verzögerungsschicht (d) mit der Indikatorschicht (2),
(B'-3) Trocknen der Indikatorschicht (2) zur Herstellung einer Anordnung (B');
(C') Kaschieren der Anordnungen (A') und (B').

12. Verfahren zur Herstellung einer Vorrichtung gemäß mindestens einem der Ansprüche 1 bis 8,
bei dem eine erste Schicht, ausgewählt aus Deckschicht und Verzögerungsschicht, bereit gestellt wird; und bei dem die weiteren Schichten der Vorrichtung sequenziell gemäß der Reihenfolge ihrer Anordnung in der Vorrichtung aufgebracht werden;
wobei zumindest beim Aufbringen von Indikatorschicht und Aktivatorschicht die früher aufzubringende Schicht vor dem Aufbringen der später aufzubringenden Schicht getrocknet wird und wobei der oder die Bestandteile der später aufzubringenden Schicht in einem leicht flüchtigen organischen Lösungsmittel bereitgestellt und aufgebracht werden, wobei zwischen Indikatorschicht und Aktivatorschicht keine weitere Schicht vorgesehen ist oder wobei zwischen Indikatorschicht und Aktivatorschicht eine oder mehrere weitere Schichten vorgesehen sind.

13. Verfahren gemäß Anspruch 9, bei dem die Trocknung mindestens einer Schicht unter Erhitzen der Schicht auf eine Temperatur in Bereich von 40-150°C, bevorzugt 50-140°C, stärker bevorzugt 60-120°C und insbesondere bevorzugt 70-100°C, erfolgt, und/oder bei dem die Trocknung mindestens einer Schicht unter Anlegen eines Unterdrucks erfolgt.

14. Verfahren zur Herstellung einer Vorrichtung gemäß mindestens einem der Ansprüche 1 bis 8, bei dem zumindest eine Schicht, ausgewählt aus Indikatorschicht und Aktivatorschicht durch Aufbringen des betreffenden Bestandteils oder der betreffenden Bestandteile in Form von Partikeln durchgeführt wird, wobei das Aufbringen der Partikel entweder unter Verwendung eines Aerosols, bevorzugt durch Sprühen unter Einsatz von Druckluft, durchgeführt wird oder unter Verwendung einer Druckwalze, bevorzugt unter Einsatz elektrischer Aufladung von Partikeln und/oder der Druckwalze, erfolgt.

15. Verpackung für Tiefkühlprodukt, umfassend die Vorrichtung gemäß einem oder mehreren der vorstehenden Ansprüche 1 bis 6.

16. Tiefkühlprodukt umfassend die Verpackung gemäß Anspruch 15.

## Claims

1. Device for indicating the history of a product comprising the following layers:
(a) a covering layer (1), impermeable to moisture,
(b) an indicator layer (2) comprising at least one indicator,
(c) an activator layer (3) comprising at least one activator, as well as
(d) an optional delaying layer (4),
wherein the covering layer is arranged over the indicator layer, the activator layer and the delaying layer,
wherein the indicator layer is arranged between the covering layer and optional delaying layer, and
wherein the activator layer may be absent where an indicator is used which is activated by H₂O,
**characterised in that** at least one of the layers comprises a cellulose derivative selected from hydroxypropyl methylcellulose (HPMC), methylcellulose (MC), hydroxypropyl cellulose (HPC), carboxymethylcellulose (CMC) and mixtures thereof, preferably HPMC.

2. Device according to claim 1, wherein the indicator layer comprises a pH indicator, preferably an anthocyanin colouring, and the activator layer comprises an acid or base as activator.

3. Device according to one or more of the claims 1 to 2, wherein the indicator layer and/or the activator layer contains at least one hygroscopic salt which is preferably selected from the group consisting of magnesium chloride, potassium chloride and calcium chloride.

4. Device according to at least one of the claims 1 to 3, wherein the activator layer (d) is formed of 2-30, preferably 3-8, more preferably 4-6 sequential individual layers and/or wherein the indicator layer (c) is formed of 2-40, preferably 4-10, more preferably 6-8 sequential individual layers.

5. Device according to at least one of the claims 1 to 4, wherein the layers (a), (b), (c) and (d) are arranged as follows:
(a) covering layer (1),
(b) indicator layer (2),
(d) optional delaying layer (4), and
(c) activator layer (3),
or
(a) covering layer (1),
(c) activator layer (3),
(b) indicator layer (2), and
(d) optional delaying layer (4),
or
(a) covering layer (1),
(b) indicator layer (2),
(c) activator layer (3), and
(e) optional delaying layer (4).

6. Device according to at least one of the claims 1-5 which is applied to a product packaging.

7. Protected device, comprising a device according to at least one of the claims 1-5 as well as a protective layer, wherein the protective layer is applied to the outermost layer, opposite the covering layer, of the device according to at least one of the claims 1-5.

8. Device according to at least one of the claims 1-5 or protected device according to claim 7,
wherein the device or protected device is in the form of a rolled-up web.

9. Method for producing a device according to at least one of the claims 1 to 8, wherein one or more of the layers present in the device is formed by carrying out one or more times in sequence the working steps (i) and (ii):
(i) printing and
(ii) drying the printed layer.

10. Method for producing a device according to at least one of the claims 1 to 8, comprising the following steps:
(A-1) providing the covering layer (1),
(A-2) coating the covering layer (1) with the indicator layer (2),
(A-3) drying the indicator layer (2),
to produce an arrangement (A)
(B-1) providing a delaying layer (4),
(B-2) coating the delaying layer (4) with the activator layer (3),
(B-3) drying the activator layer (3) to produce an arrangement (B);
(C) laminating the arrangements (A) and (B).

11. Method for producing a device according to at least one of the claims 1 to 8, comprising the following steps:
(A'-1) providing the covering layer (1),
(A'-2) coating the covering layer (a) with the activator layer (3),
(A'-3) drying the activator layer (3),
to produce an arrangement (A')
(B'-1) providing a delaying layer (d),
(B'-2) coating the delaying layer (d) with the indicator layer (2),
(B'-3) drying the indicator layer (2) to produce an arrangement (B');
(C') laminating the arrangements (A') and (B').

12. Method for producing a device according to at least one of the claims 1 to 8,
wherein a first layer, selected from covering layer and delaying layer, is provided; and wherein the further layers of the device are applied sequentially according to the sequence of their arrangement in the device;
wherein, at least during the application of indicator layer and activator layer, the layer which is applied earlier is dried before application of the layer which is applied later and wherein the component(s) of the layer which is applied later are provided and applied in a volatile organic solvent, wherein no further layer is provided between indicator layer and activator layer or wherein one or more further layers are provided between indicator layer and activator layer.

13. Method according to claim 9, wherein the drying of at least one layer involves heating the layer to a temperature within the range from 40-150°C, preferably 50-140°C, more preferably 60-120°C and particularly preferably 70-100°C, and/or wherein the drying of at least one layer takes place under a vacuum.

14. Method for producing a device according to at least one of the claims 1 to 8, wherein at least one layer, selected from indicator layer and activator layer, is produced through application of the relevant component or the relevant components in the form of particles, wherein the application of the particles is carried out either using an aerosol, preferably by spraying using compressed air, or using a print roller, preferably using electrical charging of the particles and/or the print roller.

15. Packaging for deep-frozen product, comprising the device according to one or more of the preceding claims 1 to 6.

16. Deep-frozen product comprising the packaging according to claim 15.

## Revendications

1. Dispositif destiné à l'affichage de l'historique d'un produit, comprenant les couches ci-dessous :
(a) une couche supérieure (1) imperméable à l'humidité,
(b) une couche d'indication (2) qui comprend au moins un indicateur,
(c) une couche d'activation (3) qui comprend au moins un activateur, et
(d) une couche retardatrice (4) facultative,
dans lequel la couche supérieure est agencée au-dessus de la couche d'indication, de la couche d'activation et de la couche retardatrice,
dans lequel la couche d'indication est agencée entre la couche supérieure et la couche retardatrice facultative, et
dans lequel la couche d'activation peut être absente si l'on utilise un indicateur activé par H₂O,
**caractérisé en ce qu'**au moins une des couches comprend un dérivé de cellulose choisi parmi hydroxypropylméthylcellulose (HPMC), méthylcellulose (MC), hydroproxypropylcellulose (HPC), carboxyméthylcellulose (CMC) et leurs mélanges, de manière préférée HPMC.

2. Dispositif selon la revendication 1, dans lequel la couche d'indication comprend un indicateur de pH, de manière préférée un colorant à base d'anthocyanine, et la couche d'activation présente un acide ou une base en tant qu'activateur.

3. Dispositif selon une ou plusieurs des revendications 1 à 2, dans lequel la couche d'indication et/ou la couche d'activation contient au moins un sel hygroscopique choisi de manière préférée dans le groupe constitué du chlorure de magnésium, du chlorure de potassium et du chlorure de calcium.

4. Dispositif selon au moins l'une quelconque des revendications 1 à 3, dans lequel la couche d'activation (d) est formée de 2 à 30, de manière préférée 3 à 8, de manière plus préférée 4 à 6 couches individuelles séquentielles et/ou dans lequel la couche d'indication (c) est formée de 2 à 40, de manière préférée 4 à 10, de manière plus préférée 6 à 8 couches individuelles séquentielles.

5. Dispositif selon au moins l'une quelconque des revendications 1 à 4, dans lequel les couches (a), (b), (c) et (d) sont agencées comme suit :
(a) couche supérieure (1),
(b) couche d'indication (2),
(d) couche retardatrice (4) facultative, et
(c) couche d'activation (3),
ou
(a) couche supérieure (1),
(c) couche d'activation (3),
(b) couche d'indication (2), et
(d) couche retardatrice (4) facultative,
ou
(a) couche supérieure (1),
(b) couche d'indication (2),
(c) couche d'activation (3), et
(d) couche retardatrice (4) facultative.

6. Dispositif selon au moins l'une quelconque des revendications 1 à 5, qui est appliqué sur un emballage de produit.

7. Dispositif protégé, comprenant un dispositif selon au moins l'une quelconque des revendications 1 à 5 et une couche protectrice, dans lequel la couche protectrice est appliquée sur la couche la plus externe opposée à la couche supérieure du dispositif selon au moins l'une quelconque des revendications 1 à 5.

8. Dispositif selon au moins l'une quelconque des revendications 1 à 5 ou dispositif protégé selon la revendication 7,
dans lequel le dispositif ou le dispositif protégé se présente sous la forme d'une bande enroulée.

9. Procédé de fabrication d'un dispositif selon au moins l'une quelconque des revendications 1 à 8, dans lequel une ou plusieurs des couches présentes dans le dispositif est/sont formée(s) en mettant une ou plusieurs fois en œuvre de manière séquentielle les étapes (i) et (ii) consistant à :
(i) imprimer et
(ii) sécher la couche imprimée.

10. Procédé de production d'un dispositif selon au moins l'une quelconque des revendications 1 à 8, comprenant les étapes ci-dessous consistant à :
(A-1) fournir la couche supérieure (1),
(A-2) enduire la couche supérieure (1) avec la couche d'indication (2),
(A-3) sécher la couche d'indication (2)
afin de produire un agencement (A)
(B-1) fournir une couche retardatrice (4),
(B-2) enduire la couche retardatrice (4) avec la couche d'activation (3),
(B-3) sécher la couche d'activation (3)
afin de produire un agencement (B) ;
(C) contrecoller les agencements (A) et (B).

11. Procédé de production d'un dispositif selon au moins l'une quelconque des revendications 1 à 8, comprenant les étapes ci-dessous consistant à :
(A'-1) fournir la couche supérieure (1),
(A'-2) enduire la couche supérieure (a) avec la couche d'activation (3),
(Av-3) sécher la couche d'activation (3)
afin de produire un agencement (A')
(B'-1) fournir une couche retardatrice (d),
(B'-2) enduire la couche retardatrice (d) avec la couche d'indication (2),
(B'-3) sécher la couche d'indication (2)
afin de produire un agencement (B') ;
(C') contrecoller les agencements (A') et (B').

12. Procédé de production d'un dispositif selon au moins l'une quelconque des revendications 1 à 8,
dans lequel une première couche, choisie parmi la couche supérieure et la couche retardatrice, est fournie ; et dans lequel les autres couches du dispositif sont appliquées de manière séquentielle dans l'ordre de leur agencement au sein du dispositif ;
dans lequel, au moins lors de l'application de la couche d'indication et de la couche d'activation, la couche à appliquer plus tôt est séchée avant la couche à appliquer plus tard et dans lequel le ou les composant(s) de la couche à appliquer plus tard est/sont fourni(s) et appliqué(s) dans un solvant organique légèrement volatil, dans lequel aucune autre couche n'est prévue entre la couche d'indication et la couche d'activation ou dans lequel une ou plusieurs autre(s) couche(s) est/sont prévue(s) entre la couche d'indication et la couche d'activation.

13. Procédé selon la revendication 9, dans lequel le séchage d'au moins une couche a lieu avec chauffage de la couche à une température dans la plage comprise entre 40 et 150 °C, de manière préférée entre 50 et 140 °C, de manière plus préférée entre 60 et 120 °C et de manière particulièrement préférée entre 70 et 100 °C, et/ou dans lequel le séchage d'au moins une couche a lieu avec application d'une pression négative.

14. Procédé de production d'un dispositif selon au moins l'une quelconque des revendications 1 à 8, dans lequel au moins une couche choisie parmi la couche d'indication et la couche d'activation est réalisée en appliquant le composant concerné ou les composants concernés sous forme de particules, dans lequel l'application des particules est réalisée soit en utilisant un aérosol, de manière préférée par pulvérisation à l'aide d'air comprimé, soit en utilisant un rouleau presseur, de manière préférée à l'aide d'un chargement électrique de particules et/ou du rouleau presseur.

15. Emballage pour produit congelé, comprenant le dispositif selon l'une quelconque ou plusieurs des revendications 1 à 6.

16. Produit congelé comprenant l'emballage selon la revendication 15.
